# EUROPEAN PATENT APPLICATION

(11) **EP 4 319 080 A1**
(43) Date of publication of application: **07.02.2024**
(21) Application number: 22794362.8
(22) Date of filing: 10.03.2022
(51) Int. Cl.: H04L 41/0213

(54) **METHOD AND APPARATUS FOR REMOTE CONTROL**

(30) Priority: 25.04.2021 CN 202110448849
(71) Applicant: Huawei Technologies Co., Ltd., Shenzhen, Guangdong 518129 (CN)
(72) Inventor: HUANG, Xiangrong, Shenzhen, Guangdong 518129 (CN); ZHAO, Wenwei, Shenzhen, Guangdong 518129 (CN)
(74) Representative: Goddar, Heinz J.
(86) International application number: PCT/CN2022/080097
(87) International publication number: WO 2022/227883

(57) **Abstract**

A remote control method and apparatus are provided, to reduce a remote control delay. The method includes: receiving a wakeup command and a remote control command when a communication module in a vehicle is in a dormant state that supports a remote wakeup function; enabling, based on the wakeup command, the communication module to enter a wakeup state; and sending a control message to a component in the vehicle based on the remote control command, to start the component in the vehicle or indicate the component in the vehicle to perform an operation indicated by the remote control command. The remote control command is sent to the communication module when the communication module in the vehicle is in the dormant state, so that the communication module immediately performs remote control after waking up the component in the vehicle, to effectively avoid a delay introduced when the remote control command is sent after the component in the vehicle is woken up and gives a response, and help improve remote control timeliness.

## Description

### CROSS-REFERENCE TO RELATED APPLICATIONS

This application claims priority to Chinese Patent Application No. 202110448849. 5, filed with the China National Intellectual Property Administration on April 25, 2021 and entitled "REMOTE CONTROL METHOD AND APPARATUS", which is incorporated herein by reference in its entirety.

### TECHNICAL FIELD

This application relates to the field of Internet of vehicles technologies, and in particular, to a remote control method and apparatus.

### BACKGROUND

With development of Internet of vehicles technologies, a remote control function is more widely applied to vehicles. When a vehicle supports the remote control function, a user can control some behaviors of a component in the vehicle by using a mobile phone. For example, in hot summer or cold winter, before getting on the vehicle, the user may start an air conditioner in the vehicle by using the mobile phone, and then open a door and get on the vehicle after the air conditioner adjusts a temperature in the vehicle to a proper temperature. For another example, when the user needs to use the vehicle, the user may alternatively call the vehicle by using the mobile phone, so that the vehicle automatically drives to a location at which the user is currently located, and then directly get on the vehicle, instead of walking to a location of the vehicle to get on the vehicle. It can be learned that, the vehicle supports the remote control function, to effectively improve comfort and convenience of using the vehicle by the user.

However, a remote control procedure in the conventional technology is usually as follows: A user sends a related instruction of remote control to a vehicle management server by using a mobile phone. After receiving the related instruction, the vehicle management server sends a wakeup SMS message to a vehicle, waits for a wakeup success response returned by the vehicle, sends a remote control command to the vehicle if receiving the wakeup success response, waits for a control result returned by the vehicle, and returns the control result to the user by using the mobile phone. However, in this manner, after sending the related instruction of remote control, the user needs to wait a long period of time to learn of a control result, resulting in a long remote control delay. This is not conducive to user experience. Based on this, how to reduce the remote control delay becomes a technical problem that needs to be resolved as soon as possible currently.

### SUMMARY

This application provides a remote control method and apparatus, to reduce a remote control delay.

According to a first aspect, this application provides a remote control method. The method is applied to a communication module in a vehicle, and the method includes: receiving a wakeup command and a remote control command when the communication module is in a dormant state that supports a remote wakeup function; enabling, based on the wakeup command, the communication module to enter a wakeup state; and sending a control message to a component in the vehicle based on the remote control command, to start the component in the vehicle or indicate the component in the vehicle to perform an operation indicated by the remote control command. In this design, the remote control command is sent to the communication module when the communication module in the vehicle is in the dormant state, so that the communication module immediately performs remote control after waking up the component in the vehicle, to effectively avoid a delay introduced when the remote control command is sent after the component in the vehicle is woken up and gives a response, and help improve remote control timeliness.

In a possible design, the remote control command may be an Internet protocol (internet protocol, IP) data packet, and the wakeup command may be an SMS message or an IP data packet. In this design, the remote control command or the wakeup command is sent in a network manner in which the IP data packet is used. Compared with a sending manner in which the SMS message is used, in this design, an SMS message forwarding delay introduced when a command is forwarded by an SMS message center on an operator side can be reduced, to help further reduce a delay of remotely controlling the vehicle. In addition, even if the wakeup command is sent by using the SMS message, because the remote control command is sent in a form of an IP data packet before the communication module is woken up, it can still be ensured, as much as possible, that the communication module continuously performs wakeup and remote control.

In a possible design, the wakeup command and the remote control command may be sent to the communication module in a same IP data packet, or may be sent to the communication module in two consecutive IP data packets. This design can enable, as much as possible, the communication module to receive the wakeup command and the remote control command at a same moment, which helps implement a solution in which the communication module performs remote control immediately after wakeup.

In a possible design, the wakeup command and the remote control command may be sent by a vehicle management server to the communication module. This design helps implement flexible management of remote control of the vehicle by the vehicle management server and centralized management of remote control of different vehicles.

In a possible design, the wakeup command and the remote control command may be sent to the communication module by a user terminal that logs in to the vehicle management server. In this design, a forwarding delay introduced when a command is forwarded by the vehicle management server can be reduced, and a remote control delay can be further reduced.

In a possible design, before receiving the wakeup command and the remote control command, the communication module may further log in to the vehicle management server, to establish a connection to the vehicle management server, so that the vehicle management server sends the wakeup command and the remote control command to the communication module through the connection.

In a possible design, before receiving the wakeup command and the remote control command, the communication module may further periodically send a valid network address of the communication module to the vehicle management server. This design can enable the vehicle management server to obtain a latest network address of the vehicle management server as much as possible, to increase a success rate of sending the wakeup command or the remote control command.

In a possible design, before receiving the wakeup command and the remote control command, the communication module may further send an updated network address of the communication module to the vehicle management server. This design can enable the vehicle management server to obtain a changed network address of the communication module in a timely manner, to increase a success rate of sending the wakeup command or the remote control command.

In a possible design, before receiving the wakeup command and the remote control command, the communication module may further periodically send a heartbeat data packet to the vehicle management server. The heartbeat data packet is used to maintain a persistent connection between the vehicle management server and the communication module. This design helps the vehicle management server send the wakeup command and the remote control command to the communication module through the persistent connection, without re-establishing a connection any more, to effectively save network resources.

In a possible design, the heartbeat data packet may include the valid network address or the updated network address of the communication module. In this design, a network address synchronization operation may be implemented in a procedure of maintaining the persistent connection, without independently performing the network address synchronization operation by additionally wasting resources any more, to help save network resources.

In a possible design, before receiving the wakeup command and the remote control command, the communication module may further send an updated key to the vehicle management server. The updated key may be used for subsequent communication between the communication module and the vehicle management server, for example, sending of the wakeup command and the remote control command in an encrypted manner. Correspondingly, after the communication module receives the wakeup command and the remote control command, if the wakeup command and the remote control command each are an encrypted data packet, the data packet may be further decrypted by using the updated key, to obtain the wakeup command and the remote control command in a plaintext form. The wakeup command and the remote control command are sent in an encrypted manner, to help improve remote control security.

In a possible design, before receiving the wakeup command and the remote control command, the communication module may further periodically perform authentication with the vehicle management server. In this design, the vehicle management server periodically detects authorization of the communication module, so that the wakeup command and the remote control command can be sent to the communication module only when the communication module is authorized. Remote control is not performed when the communication module is unauthorized, to effectively improve remote control security. In addition, authentication is periodically performed, so that the wakeup command and the remote control command can be directly sent when remote control needs to be performed, without re-performing authentication, to further improve remote control efficiency.

According to a second aspect, this application provides a remote control method. The method is applicable to any device having a processing capability, for example, a vehicle management server. That the method is applied to the vehicle management server is used as an example. The method includes: The vehicle management server receives a first remote control command from a user terminal; sends a wakeup command to a vehicle based on the first remote control command, to enable a communication module in the vehicle to enter a wakeup state; and sends a second remote control command to the vehicle based on the first remote control command when the communication module is in a dormant state that supports a remote wakeup function, to indicate a component in the vehicle to start or perform a first operation.

In a possible design, the second remote control command may be an IP data packet, and the wakeup command may be an SMS message or an IP data packet.

In a possible design, the vehicle management server may place the wakeup command and the remote control command in a same IP data packet and send the IP data packet to the communication module, or may respectively place the wakeup command and the remote control command in two consecutive IP data packets and send the two consecutive IP data packets to the communication module.

In a possible design, before sending the wakeup command and sending the second remote control command, the vehicle management server may further accept login of the communication module.

In a possible design, before sending the wakeup command and sending the second remote control command, the vehicle management server may further periodically receive a valid network address of the communication module from the communication module.

In a possible design, when the vehicle management server periodically receives the valid network address of the communication module from the communication module, the vehicle management server sets a network address of the communication module to an invalid state if the vehicle management server receives no new valid network address within duration exceeding one period. In this design, the invalid state means that a network link between the vehicle management server and the communication module is interrupted. A state of the network address of the communication module is updated, so that the vehicle management server can learn of a state of the network link in a timely manner, to determine a subsequent command sending manner.

In a possible design, the vehicle management server may further obtain a state of network address information of the communication module before sending the wakeup command and sending the second remote control command; and if the network address information is in a valid state, send the wakeup command and the second remote control command to the communication module based on the valid network address information; or if the network address information is in an invalid state, send a wakeup SMS message to the communication module. In this design, the communication module is woken up in a form of an IP data packet when quality of the network link between the vehicle management server and the communication module is good, to improve efficiency of waking up the vehicle and remotely controlling the vehicle. In addition, the communication module is woken up in an SMS message form when the network link between the vehicle management server and the communication module is interrupted, to successfully wake up the vehicle in a conventional form, and reduce unnecessary communication overheads. It can be learned that, both efficiency and a success rate of remote control are ensured in this design.

In a possible design, before sending the wakeup command and sending the second remote control command, the vehicle management server may further receive an updated network address of the communication module from the communication module.

In a possible design, before receiving the first remote control command from the user terminal, the vehicle management server may further send the network address of the communication module to the user terminal.

In a possible design, after determining that the user terminal logs in to the vehicle management server, the vehicle management server may further periodically send the valid network address of the communication module to the user terminal, or send a current network address of the communication module to the user terminal when a preset event is triggered. The preset event may be, for example, that the network address of the communication module is updated, so that the vehicle management server sends the updated network address of the communication module to the user terminal. In this manner, the user terminal can learn of a latest network address of the communication module in a timely manner, so that the user terminal directly sends the wakeup command and a third remote control command to the communication module based on the latest network address, to reduce a forwarding delay of the vehicle management server, and further improve remote control efficiency.

In a possible design, before sending the wakeup command and sending the second remote control command, the vehicle management server may further periodically receive a heartbeat data packet from the communication module.

In a possible design, the heartbeat data packet may include the valid network address or the updated network address of the communication module.

In a possible design, before sending the wakeup command and sending the second remote control command, the vehicle management server may further receive an updated key from the communication module, and encrypt the wakeup command and the second remote control command by using the updated key.

In a possible design, before sending the wakeup command and sending the second remote control command, the vehicle management server may further periodically perform authentication with the communication module.

In a possible design, the vehicle management server may further send a wakeup SMS message to the vehicle when sending the wakeup command to the vehicle. In this design, because a wireless coverage effect of the SMS message is better than a network coverage effect of a data service, the wakeup command is sent to the communication module in both a network form and an SMS message form, so that the wakeup command can be quickly transferred to the communication module when a network is good, to improve efficiency of waking up the communication module, and the communication module can be successfully woken up by using a wakeup SMS message with a better network coverage effect when a network is not good.

According to a third aspect, this application provides a remote control method. The method is applicable to any device having a user interaction capability, for example, a user terminal. That the method is applied to the user terminal is used as an example. The method includes: The user terminal receives a network address of a communication module in a vehicle from a vehicle management server; and sends a third remote control command to the vehicle based on the network address when the communication module is in a dormant state that supports a remote wakeup function. The third remote control command indicates a component in the vehicle to start or perform a first operation. In this design, the user terminal directly wakes up and controls the vehicle, to not only help reduce a delay introduced when the vehicle management server indirectly forwards a wakeup command and a remote control command, to effectively improve remote control efficiency, but also disperse working pressure of the vehicle management server as much as possible.

In a possible design, the user terminal may further send a wakeup command to the vehicle based on the network address, to enable the communication module to enter a wakeup state. In this design, the wakeup command is sent in a network form, so that a forwarding delay introduced when the wakeup command is forwarded by an SMS message service center can be reduced, to help further improve remote control efficiency.

In a possible design, the user terminal may further send a first remote control command to the vehicle management server, so that the vehicle management server indicates, in a network form or an SMS message form based on the first remote control command, the component in the vehicle to start or perform the first operation. In this design, the wakeup command and the remote control command are sent to the communication module in at least two of a network form of the user terminal, an SMS message form of the user terminal, a network form of the vehicle management server, and an SMS message form of the vehicle management server, so that a probability that the communication module receives the wakeup command can be increased in a plurality of sending manners, and a possibility of successfully waking up the vehicle can be increased.

In a possible design, the user terminal may periodically receive a valid network address of the communication module from the vehicle management server, or receive, from the vehicle management server, a network address that is of the communication module and that is triggered by a preset event. The preset event may be, for example, that the network address of the communication module is updated, so that the user terminal receives an updated network address of the communication module from the vehicle management server.

In a possible design, when the user terminal periodically receives the network address of the communication module from the vehicle management server, the user terminal sets the network address of the communication module to an invalid state if the user terminal receives no new valid network address within duration exceeding one period.

In a possible design, the user terminal may further obtain a state of network address information of the communication module before sending the third remote control command; and if the network address information is in a valid state, send the wakeup command and the third remote control command to the communication module based on the valid network address information, or if the network address information is in an invalid state, send the first remote control command to the vehicle management server.

According to a fourth aspect, this application provides a remote control apparatus, including: a transceiver unit, configured to receive a wakeup command and a remote control command when a communication module in a vehicle is in a dormant state that supports a remote wakeup function; a wakeup unit, configured to enable, based on the wakeup command, the communication module to enter a wakeup state; and a control unit, configured to send a control message to a component in the vehicle based on the remote control command. The control message is used to start the component or indicate the component to perform an operation indicated by the remote control command.

In a possible design, the remote control command may be an IP data packet, and the wakeup command may be an SMS message or an IP data packet.

In a possible design, the wakeup command and the remote control command may be sent to the communication module in a same IP data packet, or may be sent to the communication module in two consecutive IP data packets.

In a possible design, the wakeup command and the remote control command may be sent by a vehicle management server.

In a possible design, the wakeup command and the remote control command may be sent by a user terminal that logs in to the vehicle management server.

In a possible design, before the transceiver unit receives the wakeup command and the remote control command, the transceiver unit may further perform at least one of the following operations: logging in to the vehicle management server; periodically sending a valid network address of the communication module to the vehicle management server; sending an updated network address of the communication module to the vehicle management server; periodically sending a heartbeat data packet to the vehicle management server; sending an updated key to the vehicle management server; or periodically performing authentication with the vehicle management server.

In a possible design, the heartbeat data packet may include the valid network address or the updated network address of the communication module.

According to a fifth aspect, this application provides a remote control apparatus, including a transceiver unit and a processing unit. The transceiver unit performs the following operations under control of the processing unit: receiving a first remote control command from a user terminal; sending a wakeup command to a vehicle based on the first remote control command, to enable a communication module in the vehicle to enter a wakeup state; and sending a second remote control command to the vehicle based on the first remote control command when the communication module is in a dormant state that supports a remote wakeup function, to indicate a component in the vehicle to start or perform a first operation.

In a possible design, the second remote control command may be an IP data packet, and the wakeup command may be an SMS message or an IP data packet.

In a possible design, the transceiver unit may place the wakeup command and the remote control command in a same IP data packet and send the IP data packet to the communication module, or may respectively place the wakeup command and the remote control command in two consecutive IP data packets and send the two consecutive IP data packets to the communication module.

In a possible design, before the transceiver unit sends the wakeup command and sends the second remote control command, the transceiver unit is further configured to perform at least one of the following operations: accepting login of the communication module; periodically receiving a valid network address of the communication module from the communication module; receiving an updated network address of the communication module from the communication module; periodically receiving a heartbeat data packet from the communication module; receiving an updated key from the communication module; or periodically performing authentication with the communication module.

In a possible design, when the transceiver unit periodically receives the valid network address of the communication module from the communication module, the processing unit sets a network address of the communication module to an invalid state if the transceiver unit receives no new valid network address within duration exceeding one period.

In a possible design, the transceiver unit may further obtain a state of network address information of the communication module before sending the wakeup command and sending the second remote control command; and if the network address information is in a valid state, send the wakeup command and the second remote control command to the communication module based on the valid network address information; or if the network address information is in an invalid state, send a wakeup SMS message to the communication module.

In a possible design, the heartbeat data packet may include the valid network address or the updated network address of the communication module.

In a possible design, after determining that the user terminal logs in to the vehicle management server, the transceiver unit may further periodically send the valid network address of the communication module to the user terminal, or send an updated valid network address of the communication module to the user terminal.

In a possible design, the transceiver unit may further send a wakeup SMS message to the vehicle when sending the wakeup command to the vehicle.

According to a sixth aspect, this application provides a remote control apparatus, including a transceiver unit and a processing unit. The transceiver unit performs the following operations under control of the processing unit: receiving a network address of a communication module in a vehicle from a vehicle management server; and sending a third remote control command to the vehicle based on the network address when the communication module is in a dormant state that supports a remote wakeup function, to indicate a component in the vehicle to start or perform a first operation.

In a possible design, the transceiver unit may further send a wakeup command to the vehicle based on the network address, to enable the communication module to enter a wakeup state.

In a possible design, the transceiver unit may further send a first remote control command to the vehicle management server, to indicate the component in the vehicle to start or perform the first operation.

In a possible design, the transceiver unit may further periodically receive a valid network address of the communication module from the vehicle management server, or receive a changed network address of the communication module from the vehicle management server.

In a possible design, when the transceiver unit periodically receives the network address of the communication module from the vehicle management server, the processing unit sets the network address of the communication module to an invalid state if the transceiver unit receives no new valid network address within duration exceeding one period.

In a possible design, the transceiver unit may further obtain a state of network address information of the communication module before sending the third remote control command; and if the network address information is in a valid state, send the wakeup command and the third remote control command to the communication module based on the valid network address information, or if the network address information is in an invalid state, send the first remote control command to the vehicle management server.

According to a seventh aspect, this application provides a remote control apparatus, including a processor, a transceiver, and a memory. The processor is connected to the memory, the memory stores a computer program, and when the computer program stored in the memory is executed by the processor, the remote control apparatus is enabled to perform the following operations: receiving a wakeup command and a remote control command when a communication module is in a dormant state that supports a remote wakeup function; enabling, based on the wakeup command, the communication module to enter a wakeup state; and sending a control message to a component in a vehicle based on the remote control command, to start the component or indicate the component to perform an operation indicated by the remote control command.

In a possible design, the remote control command may be an IP data packet, and the wakeup command may be an SMS message or an IP data packet.

In a possible design, the wakeup command and the remote control command may be sent to the communication module in a same IP data packet, or may be sent to the communication module in two consecutive IP data packets.

In a possible design, the wakeup command and the remote control command may be sent by a vehicle management server.

In a possible design, the wakeup command and the remote control command may be sent by a user terminal that logs in to the vehicle management server.

In a possible design, when the computer program stored in the memory is executed by the processor, the remote control apparatus is enabled to further perform at least one of the following operations: logging in to the vehicle management server; periodically sending a valid network address of the communication module to the vehicle management server; sending an updated network address of the communication module to the vehicle management server; periodically sending a heartbeat data packet to the vehicle management server; sending an updated key to the vehicle management server; or periodically performing authentication with the vehicle management server.

In a possible design, the heartbeat data packet may include the valid network address or the updated network address of the communication module.

According to an eighth aspect, this application provides a remote control apparatus, including a processor, a transceiver, and a memory. The processor is connected to the memory, the memory stores a computer program, and when the computer program stored in the memory is executed by the processor, the remote control apparatus is enabled to perform the following operations: receiving a first remote control command from a user terminal; sending a wakeup command to a vehicle based on the first remote control command, to enable a communication module in the vehicle to enter a wakeup state; and sending a second remote control command to the vehicle based on the first remote control command when the communication module is in a dormant state that supports a remote wakeup function, to indicate a component in the vehicle to start or perform a first operation.

In a possible design, the second remote control command may be an IP data packet, and the wakeup command may be an SMS message or an IP data packet.

In a possible design, when the computer program stored in the memory is executed by the processor, the remote control apparatus is enabled to specifically perform the following operations: placing the wakeup command and the remote control command in a same IP data packet and sending the IP data packet to the communication module, or respectively placing the wakeup command and the remote control command in two consecutive IP data packets and sending the two consecutive IP data packets to the communication module.

In a possible design, when the computer program stored in the memory is executed by the processor, before sending the wakeup command and sending the second remote control command, the remote control apparatus may further perform at least one of the following operations: accepting login of the communication module; periodically receiving a valid network address of the communication module from the communication module; receiving an updated network address of the communication module from the communication module; periodically receiving a heartbeat data packet from the communication module; receiving an updated key from the communication module; or periodically performing authentication with the communication module.

In a possible design, when the computer program stored in the memory is executed by the processor, the remote control apparatus is enabled to further perform the following operations: if periodically receiving the valid network address of the communication module from the communication module, setting a network address of the communication module to an invalid state when receiving no new valid network address within duration exceeding one period.

In a possible design, when the computer program stored in the memory is executed by the processor, the remote control apparatus is enabled to further perform the following operations: obtaining a state of network address information of the communication module before sending the wakeup command and sending the second remote control command; and if the network address information is in a valid state, sending the wakeup command and the second remote control command to the communication module based on the valid network address information; or if the network address information is in an invalid state, sending a wakeup SMS message to the communication module.

In a possible design, the heartbeat data packet may include the valid network address or the updated network address of the communication module.

In a possible design, when the computer program stored in the memory is executed by the processor, the remote control apparatus is enabled to further perform the following operations: after determining that the user terminal logs in to the vehicle management server, periodically sending the valid network address of the communication module to the user terminal, or sending an updated valid network address of the communication module to the user terminal.

In a possible design, when the computer program stored in the memory is executed by the processor, the remote control apparatus is enabled to further perform the following operation: sending a wakeup SMS message to the vehicle when sending the wakeup command to the vehicle.

According to a ninth aspect, this application provides a remote control apparatus, including a processor, a transceiver, and a memory. The processor is connected to the memory, the memory stores a computer program, and when the computer program stored in the memory is executed by the processor, the remote control apparatus is enabled to perform the following operations: receiving a network address of a communication module in a vehicle from a vehicle management server; and sending a third remote control command to the vehicle based on the network address when the communication module is in a dormant state that supports a remote wakeup function. The third remote control command indicates a component in the vehicle to start or perform a first operation.

In a possible design, when the computer program stored in the memory is executed by the processor, the remote control apparatus is enabled to further perform the following operation: sending a wakeup command to the vehicle based on the network address, to enable the communication module to enter a wakeup state.

In a possible design, when the computer program stored in the memory is executed by the processor, the remote control apparatus is enabled to further perform the following operation: sending a first remote control command to the vehicle management server, to indicate the component in the vehicle to start or perform the first operation.

In a possible design, when the computer program stored in the memory is executed by the processor, the remote control apparatus is enabled to further perform the following operations: periodically receiving a valid network address of the communication module from the vehicle management server, or receiving a changed network address of the communication module from the vehicle management server.

In a possible design, when the computer program stored in the memory is executed by the processor, the remote control apparatus is enabled to further perform the following operation: if periodically receiving the network address of the communication module from the vehicle management server, setting the network address of the communication module to an invalid state when receiving no new valid network address within duration exceeding one period.

In a possible design, when the computer program stored in the memory is executed by the processor, the remote control apparatus is enabled to further perform the following operations: obtaining a state of network address information of the communication module before sending the third remote control command; and if the network address information is in a valid state, sending the wakeup command and the third remote control command to the communication module based on the valid network address information; or if the network address information is in an invalid state, sending the first remote control command to the vehicle management server.

According to a tenth aspect, this application provides a remote control apparatus, including a processor and a communication interface. The communication interface is configured to: receive a signal from another communication apparatus different from the remote control apparatus and transmit the signal to the processor, or send a signal from the processor to the another communication apparatus different from the remote control apparatus. The processor is configured to implement the method according to any design of the first aspect based on a logic circuit or an execution code/instruction.

According to an eleventh aspect, this application provides a remote control apparatus, including a processor and a communication interface. The communication interface is configured to: receive a signal from another communication apparatus different from the remote control apparatus and transmit the signal to the processor, or send a signal from the processor to the another communication apparatus different from the remote control apparatus. The processor is configured to implement the method according to any design of the second aspect based on a logic circuit or an execution code/instruction.

According to a twelfth aspect, this application provides a remote control apparatus, including a processor and a communication interface. The communication interface is configured to: receive a signal from another communication apparatus different from the remote control apparatus and transmit the signal to the processor, or send a signal from the processor to the another communication apparatus different from the remote control apparatus. The processor is configured to implement the method according to any design of the third aspect based on a logic circuit or an execution code/instruction.

According to a thirteenth aspect, this application provides a remote control apparatus, including a processor. The processor is connected to a memory, the memory is configured to store a computer program, and the processor is configured to execute the computer program stored in the memory, so that the apparatus performs the method according to any design of the first aspect.

According to a fourteenth aspect, this application provides a remote control apparatus, including a processor. The processor is connected to a memory, the memory is configured to store a computer program, and the processor is configured to execute the computer program stored in the memory, so that the apparatus performs the method according to any design of the second aspect.

According to a fifteenth aspect, this application provides a remote control apparatus, including a processor. The processor is connected to a memory, the memory is configured to store a computer program, and the processor is configured to execute the computer program stored in the memory, so that the apparatus performs the method according to any design of the third aspect.

According to a sixteenth aspect, this application provides a remote control apparatus, including a processor and a memory. The memory stores computer program instructions, and the processor runs the computer program instructions, to implement the method according to any design of the first aspect.

According to a seventeenth aspect, this application provides a remote control apparatus, including a processor and a memory. The memory stores computer program instructions, and the processor runs the computer program instructions, to implement the method according to any design of the second aspect.

According to an eighteenth aspect, this application provides a remote control apparatus, including a processor and a memory. The memory stores computer program instructions, and the processor runs the computer program instructions, to implement the method according to any design of the third aspect.

According to a nineteenth aspect, this application provides a vehicle, including the remote control apparatus according to any design of the fourth aspect, the seventh aspect, the tenth aspect, the thirteenth aspect, or the sixteenth aspect.

According to a twentieth aspect, this application provides a remote control system, including a communication module in a vehicle and a vehicle management server. The communication module in the vehicle is configured to implement the method according to any design of the first aspect, and the vehicle management server is configured to implement the method according to any design of the second aspect.

According to a twenty-first aspect, this application provides a remote control system, including a first device, a second device, and a third device. The first device may be any device having a communication function, for example, a communication module in a vehicle, and is configured to implement the method according to any design of the first aspect. The second device may be any device having a processing function, for example, a vehicle management server, and is configured to implement the method according to any design of the second aspect. The third device may be any device having a user interaction function, for example, a user terminal, and is configured to implement the method according to any design of the third aspect.

According to a twenty-second aspect, this application provides a chip. The chip may include a processor and an interface. The processor is configured to read instructions through the interface, to perform the method according to any design of the first aspect, or perform the method according to any design of the second aspect, or perform the method according to any design of the third aspect.

According to a twenty-third aspect, this application provides a computer-readable storage medium. The computer-readable storage medium stores a computer program, and when the computer program is run, the method according to any design of the first aspect is implemented.

According to a twenty-fourth aspect, this application provides a computer-readable storage medium. The computer-readable storage medium stores a computer program, and when the computer program is run, the method according to any design in the second aspect is implemented.

According to a twenty-fifth aspect, this application provides a computer-readable storage medium. The computer-readable storage medium stores a computer program, and when the computer program is run, the method according to any design in the third aspect is implemented.

According to a twenty-sixth aspect, this application provides a computer program product. When the computer program product is run on a processor, the method according to any design of the first aspect is implemented.

According to a twenty-seventh aspect, this application provides a computer program product. When the computer program product is run on a processor, the method according to any design of the second aspect is implemented.

According to a twenty-eighth aspect, this application provides a computer program product. When the computer program product is run on a processor, the method according to any design of the third aspect is implemented.

For specific beneficial effects of the second aspect to the twenty-eighth aspect, refer to technical effects that can be achieved in corresponding designs in the first aspect. Details are not described herein again.

### BRIEF DESCRIPTION OF DRAWINGS

FIG. 1 is an example schematic diagram of a possible system architecture to which embodiments of this application are applicable;
FIG. 2 is an example schematic flowchart of a remote control method according to Embodiment 1 of this application;
FIG. 3A and FIG. 3B are an example schematic diagram of interface implementation of a remote control method according to an embodiment of this application;
FIG. 4(a) to FIG. 4(f) are an example schematic flowchart of a remote control method according to Embodiment 2 of this application;
FIG. 5A and FIG. 5B are an example schematic flowchart of a remote control method according to Embodiment 3 of this application;
FIG. 6A and FIG. 6B are an example schematic diagram of an internal architecture of a vehicle management server according to an embodiment of this application;
FIG. 7 is an example schematic diagram of an internal architecture of a user terminal according to an embodiment of this application;
FIG. 8 is an example schematic diagram of an internal architecture of a communication module in a vehicle according to an embodiment of this application;
FIG. 9 is an example schematic diagram of a delay analysis of a remote control solution commonly used in the industry;
FIG. 10 is an example schematic diagram of a delay analysis of another remote control solution commonly used in the industry;
FIG. 11 is an example schematic diagram of a delay analysis of a remote control solution according to an embodiment of this application;
FIG. 12 is an example schematic diagram of a delay analysis of another remote control solution according to an embodiment of this application;
FIG. 13 is an example schematic diagram of a structure of a remote control apparatus according to an embodiment of this application;
FIG. 14 is an example schematic diagram of a structure of another remote control apparatus according to an embodiment of this application;
FIG. 15 is an example schematic diagram of a structure of still another remote control apparatus according to an embodiment of this application; and
FIG. 16 is an example schematic diagram of a structure of yet another remote control apparatus according to an embodiment of this application.

### DESCRIPTION OF EMBODIMENTS

It should be noted that a remote control solution in embodiments of this application may be applied to the Internet of vehicles, for example, vehicle-to-everything (vehicle to everything, V2X), long term evolution-vehicle (long term evolution-vehicle, LTE-V), or vehicle-to-vehicle (vehicle-vehicle, V2V). For example, the remote control solution may be applied to a vehicle having a remote communication function, or another apparatus having a remote communication function in the vehicle. The another apparatus includes but is not limited to another sensor such as a vehicle-mounted terminal, a vehicle-mounted controller, a vehicle-mounted module, a vehicle-mounted component, a vehicle-mounted chip, a vehicle-mounted unit, a vehicle-mounted radar, or a vehicle-mounted camera. The vehicle may implement the method provided in this application by using the vehicle-mounted terminal, the vehicle-mounted controller, the vehicle-mounted module, the vehicle-mounted component, the vehicle-mounted chip, the vehicle-mounted unit, the vehicle-mounted radar, or the vehicle-mounted camera. Certainly, the remote control solution in embodiments of this application may be further applied to another intelligent terminal that has a remote communication function and that is different from the vehicle, or disposed in another intelligent terminal that has a remote communication function and that is different from the vehicle, or disposed in a component of the intelligent terminal. The intelligent terminal may be another terminal device such as an intelligent transportation device, a smart household device, or a robot. For example, the intelligent terminal includes but is not limited to an intelligent terminal or another sensor such as a controller, a chip, a radar, or a camera in the intelligent terminal, and another component.

The following describes the technical solutions in embodiments of this application with reference to the accompanying drawings in embodiments of this application. It should be noted that, in the accompanying drawings of embodiments of this application, a step in a solid box is a step to be performed by default, and a step in a dashed box is an optional step. The step in the solid box and the step in the dashed box are combined to implement a better technical solution. However, in an actual operation, only the step in the solid box may be executed, and the step in the dashed box may not be executed. In addition, it should be understood that, the following described embodiments are merely some embodiments of this application, rather than all embodiments of this application.

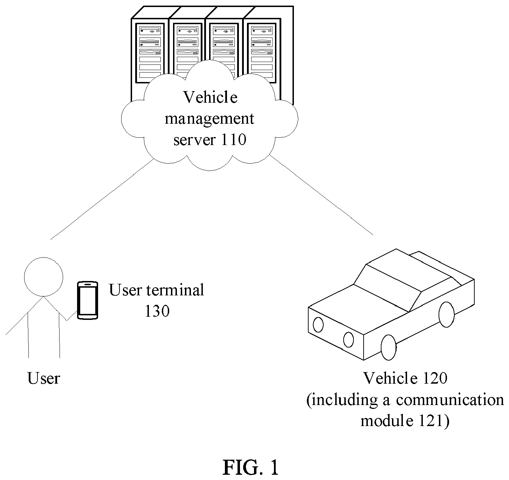

FIG. 1 is a schematic diagram of a possible system architecture to which embodiments of this application are applicable. The system architecture shown in FIG. 1 includes a vehicle management server 110, a vehicle 120, and a user terminal 130. The vehicle 120 is a vehicle having a remote communication function. The remote communication function of the vehicle 120 may be usually implemented by a communication module 121 disposed on the vehicle 120, and a common communication module 121 includes, for example, a telematics box (telematics box, TBOX). The vehicle management server 110 may be a single server, or may be a server cluster including a plurality of servers. In the Internet of vehicles field, the vehicle management server 110 may be specifically a cloud server, and is also referred to as a cloud, a cloud end, a cloud end server, a cloud end controller, an Internet of vehicles server, or the like. The cloud server is a general term for a device or component having a data processing capability, and may include, for example, a physical device such as a host or a processor, or may include a virtual device such as a virtual machine or a container, or may include a chip or an integrated circuit. The user terminal 130 is a device that provides a voice and/or data connectivity for a user. For example, the user terminal 130 may include a handheld device having a wireless connection function, or a processing device connected to a wireless modem. Currently, some examples of the user terminal 130 are a mobile phone (mobile phone), a tablet computer, a laptop computer, a palmtop computer, a mobile Internet device (mobile internet device, MID), a wearable device, a virtual reality (virtual reality, VR) device, an augmented reality (augmented reality, AR) device, a wireless terminal device in industrial control (industrial control), a wireless terminal device in self driving (self driving), a wireless terminal device in telesurgery (telesurgery), a wireless terminal device in smart grid (smart grid), a wireless terminal device in transportation safety (transportation safety), a wireless terminal device in smart city (smart city), or a wireless terminal device in smart home (smart home).

It should be understood that, in this embodiment of this application, a quantity of vehicle management servers 110, a quantity of vehicles 120, and a quantity of user terminals 130 in the system architecture are not limited, and a quantity of communication modules 121 included in each vehicle 120 is not limited either. Usually, one vehicle management server 110 may be connected to a plurality of vehicles 120 and a plurality of user terminals 130. The plurality of vehicles 120 and the plurality of user terminals 130 may be in a one-to-one correspondence, or may be in a multiple-to-one correspondence (for example, a user simultaneously has a plurality of vehicles). In addition, the vehicle management server 110 may be connected to the plurality of vehicles 120 by being connected to communication modules 121 of the plurality of vehicles 120. Each vehicle 120 usually includes one communication module 121. In addition, in addition to the vehicle management server 110, the vehicle 120, and the user terminal 130, the system architecture to which embodiments of this application are applicable may further include another device, for example, a core network device, a wireless relay device, or a wireless backhaul device. This is not limited in this embodiment of this application either. In addition, the vehicle management server 110 in this embodiment of this application may integrate all functions into one independent physical device, or may respectively deploy different functions on a plurality of independent physical devices. This is not limited in this embodiment of this application either.

Before specific embodiments are described, some terms used in the following embodiments of this application are first described by using examples:

### (1) Vehicle architecture

In embodiments of this application, a vehicle may have an integrated architecture in a unit of a functional domain. To be specific, all electronic control units (electronic control unit, ECU) of the vehicle are classified into different functional domains based on different functions, and a corresponding domain controller (domain control unit, DCU) is further disposed in each functional domain. Each domain controller is connected to all electronic control units included in a functional domain in which the domain controller is located, and is configured to implement centralized management and control of all the electronic control units that are originally distributed in the functional domain in which the domain controller is located. The functional domain is also referred to as a functional system, and a common functional domain may include but is not limited to a power drive system, a chassis and safety system, a body control system, an information entertainment system, an assisted driving system, or the like.

In the integrated architecture in the unit of the functional domain, a vehicle-mounted gateway of the vehicle serves as a central hub for interaction of the vehicle, is interconnected with all domain controllers of the vehicle, and is configured to securely transfer data between the domain controllers. When different bus architectures are used for all functional domains, the vehicle-mounted gateway is further responsible for protocol conversion between different bus architectures, to bridge the data parsing gap between different functional domains. In addition, the vehicle-mounted gateway further serves as a communication bridge between the vehicle and an external communication network, establishes a secure and efficient connection to a vehicle management server by using a communication module in the vehicle, and is configured to complete upgrade, management, maintenance, and control of the electronic control unit in the vehicle based on data received by the communication module from the vehicle management server.

### (2) Persistent connection

In embodiments of this application, the persistent connection is a relative concept of a short connection. The short connection means that communication parties establish a connection each time the communication parties need to send data, and disconnect the connection after completing sending of data. In other words, the connection established each time is used to complete a data sending operation for only one time. The persistent connection means that communication parties establish a connection; after completing sending of data, continue maintaining the connection instead of disconnecting the connection; and directly send data through the maintained connection when the communication parties need to send data subsequently. When the two communication parties maintain the persistent connection, the two communication parties can continuously send a plurality of data packets through a same connection. In addition, in a period of maintaining the persistent connection, if no data packet is sent for a long period of time, the two communication parties usually need to detect a current communication link, to find a fault in the communication link in a timely manner.

### (3) Simultaneously sending at least two data packets

In embodiments of this application, simultaneously sending at least two data packets may indicate any one piece of the following content: sending the at least two data packets in parallel through at least two threads, or consecutively sending the at least two data packets through a single thread. In other words, provided that the at least two data packets are sent at a negligible time interval, it can be considered that the at least two data packets are sent simultaneously.

### (4) User key, in-vehicle key, and vehicular interaction key

In embodiments of this application, the user key is a key used for data exchange between a user terminal and a vehicle management server. The user key may be a fixed key that is preset in the user terminal and the vehicle management server, or may be obtained by the user terminal and the vehicle management server through periodic negotiation, or may be a variable key generated based on a preset algorithm known to the user terminal and the vehicle management server. This is not specifically limited.

In embodiments of this application, the in-vehicle key is a key used for data exchange between a communication module and the vehicle management server. The in-vehicle key may be a fixed key that is preset in the communication module and the vehicle management server, or may be obtained by the communication module and the vehicle management server through periodic negotiation, or may be a variable key generated based on a preset algorithm known to the communication module and the vehicle management server. This is not specifically limited.

In embodiments of this application, the vehicular interaction key is a key used for data exchange between the communication module and the user terminal. The vehicular interaction key may be a fixed key that is preset in the communication module before a vehicle is delivered from a factory and that is synchronized by the communication module to the user terminal during first interaction with the user terminal, or may be a key allocated by the vehicle management server to the user terminal and the communication module, or may be a variable key obtained by the user terminal by periodically negotiating with the communication module based on a network address that is of the communication module and that is synchronized by the vehicle management server. This is not specifically limited.

The following further describes in detail this application with reference to accompanying drawings. It should be understood that, a specific operation method in a method embodiment may also be applied to an apparatus embodiment or a system embodiment. It should be noted that, in descriptions of this application, "at least one" means one or more, and "a plurality of' means two or more. In view of this, in embodiments of this application, "a plurality of may also be understood as "at least two". The term "and/or" describes an association relationship for describing associated objects and represents that three relationships may exist. For example, A and/or B may represent the following three cases: Only A exists, both A and B exist, and only B exists. In addition, unless otherwise specified, the character "/" usually indicates an "or" relationship between the associated objects.

In addition, it should be understood that, in the descriptions of this application, terms "first", "second", "third", "fourth", and the like are used only for purposes of distinguishing descriptions, and cannot be understood as indicating or implying relative importance, or as indicating or implying a sequence. For example, "first timer", "second timer", "third timer", and "fourth timer" are merely examples of different timers that are set for different timing events. Timing duration of the four timers may be the same or different, and priorities or importance degrees may be the same or different. This cannot be understood as implying that the timing duration of the four timers is different, or implying that the importance degrees or priorities of the four timers are different.

### Embodiment 1

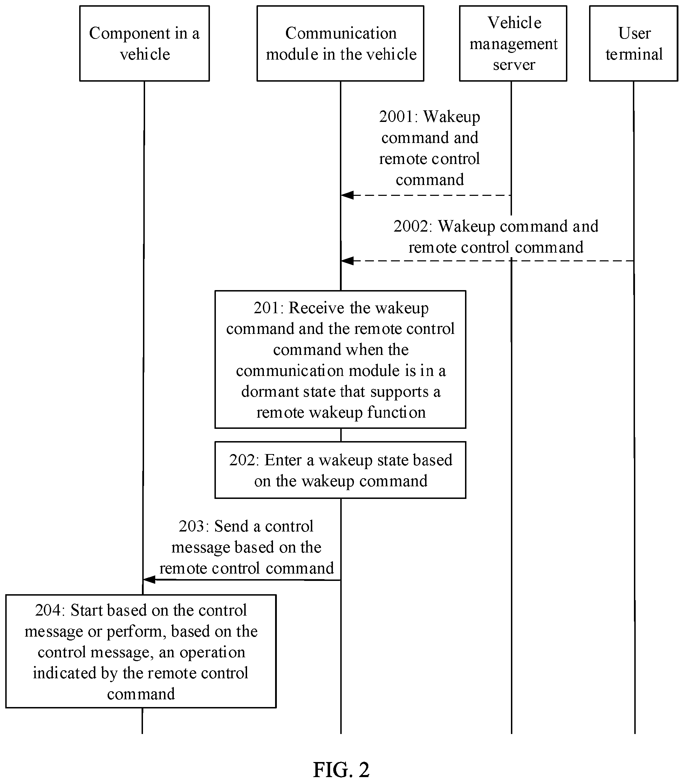

FIG. 2 is an example schematic flowchart of a remote control method according to Embodiment 1 of this application. The method is applicable to a communication module in a vehicle, a vehicle management server, a user terminal, and a component in the vehicle. The communication module in the vehicle, the vehicle management server, and the user terminal may be, for example, the communication module 121 in the vehicle 120, the vehicle management server 110, and the user terminal 130 shown in FIG. 1. As shown in FIG. 2, a procedure includes the following steps.

Step 201: The communication module receives a wakeup command and a remote control command when the communication module is in a dormant state that supports a remote wakeup function.

It should be noted that, the communication module in this embodiment of this application may have the following three states: a sleep state, a dormant state, and a wakeup state. The sleep state is also referred to as a deep sleep state. In this state, the communication module supports local wakeup but does not support remote wakeup. For example, a user may press a start button in the vehicle, to wake up the communication module in the deep sleep state. The dormant state is also referred to as a light dormant state. In this state, the communication module supports remote wakeup. For example, the user may send a remote command by using a mobile phone, to wake up the communication module in the light dormant state. In the wakeup state, the communication module is in a high power consumption working mode and can support all configured functions. The communication module is powered on regardless of whether the communication module is in the sleep state, the dormant state, or the wakeup state, but power consumption in the sleep state is lower than power consumption in the dormant state, and the power consumption in the dormant state is lower than power consumption in the wakeup state. Based on this, in step 201, "the dormant state that supports the remote wakeup function" is the dormant state in the three states. When the user does not use the vehicle, the user may choose to enable the vehicle to enter the sleep state or the dormant state. When the user chooses to enable the vehicle to enter the sleep state, the communication module in the vehicle is switched from a working state to the sleep state, and the communication module cannot receive a remote command sent by an external device, but can be woken up under an indication of the component in the vehicle; or when the user chooses to enable the vehicle to enter the dormant state, the communication module in the vehicle is switched from a working state to the dormant state, and the communication module may receive a remote command sent by an external device, for example, a wakeup command or a remote control command sent by the vehicle management server or the user terminal.

In this embodiment of this application, the wakeup command and the remote control command may be sent by the vehicle management server to the communication module (for example, step 2001 in FIG. 2, where for a specific implementation process, refer to Embodiment 2), or may be sent by a user terminal that logs in to the vehicle management server to the communication module (for example, step 2002 in FIG. 2, where for a specific implementation process, refer to Embodiment 3), or may be sent by both the vehicle management server and the user terminal to the communication module. Examples of sending the wakeup command and the remote control command by both the vehicle management server and the user terminal include but are not limited to the following cases: The vehicle management server sends the wakeup command to the communication module when the communication module is in the dormant state, and the user terminal sends the remote control command to the communication module when the communication module is in the dormant state; or the vehicle management server sends the remote control command to the communication module when the communication module is in the dormant state, and the user terminal sends the wakeup command to the communication module when the communication module is in the dormant state; or the vehicle management server sends the remote control command and a second remote control command to the communication module when the communication module is in the dormant state, and the user terminal sends a third remote control command to the communication module when the communication module is in the dormant state; or the vehicle management server sends a first wakeup command and a second remote control command to the communication module when the communication module is in the dormant state, and the user terminal sends a second wakeup command and a third remote control command to the communication module when the communication module is in the dormant state. Details are not listed herein one by one. In this way, the remote control command is sent to the communication module when the communication module is in the dormant state, instead of being sent after the communication module is woken up, to reduce a delay introduced when the remote control command is waited to be woken up and the communication module is waited for, help the communication module directly perform remote control based on the remote control command after the communication module is woken up, and effectively improve remote control timeliness.

In an optional implementation, the wakeup command may be sent in an SMS message form or an IP data packet, and the remote control command may be sent in a form of an IP data packet. In other words, the wakeup command and the remote control command may be sent in any one of the following manners: The wakeup command and the remote control command are sent to the communication module in a same IP data packet, so that the communication module simultaneously obtains the wakeup command and the remote control command; the wakeup command and the remote control command are sent to the communication module in two consecutive IP data packets, so that the communication module obtains the wakeup command and the remote control command almost without a time difference; an SMS message carrying the wakeup command and an IP data packet carrying the remote control command are simultaneously sent to the communication module; an SMS message or IP data packet carrying the wakeup command is sent to the communication module, then an IP data packet carrying the remote control command is sent to the communication module, and it needs to be ensured that the IP data packet carrying the remote control command is sent to the communication module before the SMS message or IP data packet carrying the wakeup command successfully wakes up the communication module; an SMS message carrying the wakeup command, an IP data packet carrying the wakeup command, and an IP data packet carrying the remote control command are simultaneously sent to the communication module; an SMS message carrying the wakeup command is sent to the communication module, and then an IP data packet carrying the wakeup command and the remote control command is sent to the communication module; an IP data packet carrying the wakeup command is sent to the communication module, and then an SMS message carrying the wakeup command and an IP data packet carrying the remote control command are sent to the communication module; and the like. It should be understood that there are many possible sending manners, and provided that the two commands can be sent to the communication module when the communication module is in the dormant state, the sending manners fall within the protection scope of this application. The sending manners are not listed one by one herein in this application.

It should be noted that, when a command is sent to the communication module in a form of an IP data packet, a network address of the communication module needs to be learned of. In one case, if a communication module in a future vehicle, like a subscriber identity module (subscriber identity module, SIM) card in a current mobile phone, has a fixed contact network address, for example, an international mobile subscriber identity (international mobile subscriber identity, IMSI), or a number (mobile subscriber international ISDN/PSTN number, MSISDN) that needs to be dialed by a calling user to call a user in a mobile communication network, the vehicle management server or the user terminal may directly store the network address of the communication module in the vehicle. In this way, each time remote control needs to be performed subsequently, the wakeup command or the remote control command may be sent to the communication module in a form of an IP data packet based on the network address. In another case, if the communication module in the vehicle does not have a fixed contact network address, the network address of the communication module may be obtained by the vehicle management server or the user terminal by requesting the communication module, or may be actively reported by the communication module to the vehicle management server or the user terminal. An occurring occasion of requesting or reporting may be after the vehicle management server or the user terminal learns that remote control needs to be performed, or may be before the vehicle management server or the user terminal learns that remote control needs to be performed. This is not specifically limited. It should be understood that, there are many possible implementations. The possible implementations are not listed one by one herein.

In an optional implementation, before receiving the wakeup command and the remote control command, the communication module may further perform at least one of the following operations:
Operation 1: The communication module logs in to the vehicle management server. If the communication module successfully logs in to the vehicle management server, the communication module may successfully establish a connection to the vehicle management server. In this way, the vehicle management server may send the wakeup command and the remote control command to the communication module through the connection, or may send related information of the communication module to the user terminal, so that the user terminal sends the wakeup command and the remote control command to the communication module.
Operation 2: The communication module periodically sends a valid network address of the communication module to the vehicle management server. This operation is more applicable to a scenario in which the communication module frequently moves. The valid network address is periodically synchronized, to help the vehicle management server send, based on a latest synchronized network address, an IP data packet carrying the wakeup command or the remote control command, or send a latest synchronized network address to the user terminal, so that the user terminal sends, based on the latest synchronized network address, an IP data packet carrying the wakeup command or the remote control command, to effectively increase a probability that sending of the wakeup command and the remote control command succeeds.
Operation 3: The communication module sends an updated network address of the communication module to the vehicle management server. This operation is more applicable to a scenario in which the communication module does not frequently move. The network address is synchronized in real time when the network address changes, so that the vehicle management server can accurately learn of a latest network address that is of the communication module and that is obtained after each time of change, and can further send, to the user terminal, the latest network address that is of the communication module and that is obtained after each time of change, to help increase a probability that sending of the wakeup command or the remote control command in an IP data packet succeeds.
Operation 4: The communication module periodically sends a heartbeat data packet to the vehicle management server. This operation may be used to maintain a persistent connection between the communication module and the vehicle management server. In a case of the persistent connection, if the vehicle management server receives the heartbeat data packet in one period, the vehicle management server determines that the persistent connection between the vehicle management server and the communication module still exists. The vehicle management server may directly obtain the network address of the communication module through the persistent connection, and send the wakeup command or the remote control command to the communication module based on the network address, or send the obtained network address to the user terminal, so that the user terminal sends the wakeup command or the remote control command to the communication module based on the network address, without a need to re-establish a connection. If the vehicle management server receives no heartbeat data packet in one period, the vehicle management server determines that the persistent connection between the vehicle management server and the communication module is disconnected. The vehicle management server needs to establish a connection to the communication module, and then send the wakeup command or the remote control command through the newly established connection. A packet header of the heartbeat data packet may carry the network address of the vehicle management server. The network address is address information that can be used to perform network communication with the vehicle management server, for example, may include an IP address and a port number of the vehicle management server. Content carried in a packet body of the heartbeat data packet is not specifically limited, for example, may be a default check value, or may be an empty packet, or may be a valid network address of the communication module.
Operation 5: The communication module sends an updated in-vehicle key to the vehicle management server. The in-vehicle key may be used for subsequent communication between the communication module and the vehicle management server. For example, the vehicle management server can encrypt the wakeup command and the remote control command based on a latest updated in-vehicle key, and then send the encrypted wakeup command and remote control command to the communication module, to improve remote control security.
Operation 6: The communication module periodically performs authentication with the vehicle management server. The authentication may not only enable the communication module to ensure authorization of the vehicle management server, but also enable the vehicle management server to ensure authorization of the communication module. The vehicle management server may send the wakeup command and the remote control command to only a communication module whose authentication succeeds, and the communication module may also receive and execute only a wakeup command and a remote control command that are sent by a vehicle management server whose authentication succeeds, to ensure remote control security as much as possible.

It should be noted that, Operation 1 to Operation 6 may be combined with each other, to obtain a new operation. Examples are as follows:
When Operation 1 and Operation 2 are combined, the communication module may log in to the vehicle management server, and then periodically send the valid network address of the communication module to the vehicle management server after the communication module successfully logs in to the vehicle management server, so that the vehicle management server can send, to a communication module that previously logs in and based on a valid network address that is sent, for a latest time, by communication module that previously logs in, the IP data packet carrying the wakeup command or the remote control command.
When Operation 1 and Operation 3 are combined, the communication module may log in to the vehicle management server, monitor the network address of the communication module in real time after the communication module successfully logs in to the vehicle management server, and once finding that the network address changes, send the changed network address to the vehicle management server, so that the vehicle management server can send, to the communication module that previously logs in and based on a latest network address that is of the communication module that previously logs in and that is obtained after change, the IP data packet carrying the wakeup command or the remote control command.
When Operation 1, Operation 2, and Operation 3 are combined, the communication module may first log in to the vehicle management server. After the communication module successfully logs in to the vehicle management server, the communication module may periodically send the valid network address of the communication module to the vehicle management server, and the communication module may further monitor the network address of the communication module. Once finding that the network address changes, the communication module further sends the changed network address to the vehicle management server, and restarts a sending period. In this manner, it can be further ensured that the vehicle management server learns of a most accurate network address, to help increase a probability that sending of the wakeup command or the remote control command succeeds.
When Operation 2 and Operation 4 are combined, the communication module may place the valid network address in the heartbeat data packet, and periodically send the heartbeat data packet to the vehicle management server, so that the vehicle management server parses the heartbeat data packet, to obtain the valid network address. Through such combination, an operation of periodically synchronizing the valid network address is implemented in a procedure of the persistent connection, without synchronizing the valid network address by additionally wasting resources any more, to help save computing resources of the communication module.
When Operation 3 and Operation 4 are combined, the communication module may generate a heartbeat data packet for a network address that changes in a heartbeat period, and send the heartbeat data packet to the vehicle management server, and may restart timing of the heartbeat period by using a current heartbeat data packet as a reference. Through such combination, the network address that changes in real time can be applied to a heartbeat data packet for maintaining the persistent connection, to help improve flexible management of maintaining the persistent connection and synchronizing the network address.
When Operation 2, Operation 3, and Operation 4 are combined, in addition to adding the valid network address of the communication module to a heartbeat data packet to be sent in each heartbeat period, the communication module may further separately send, to the vehicle management server, a network address that changes in a heartbeat period; or generate a new heartbeat data packet for a network address that changes in a heartbeat period, send the new heartbeat data packet to the vehicle management server, and restart timing of the heartbeat period.
When Operation 1 and Operation 4 are combined, the communication module may log in to the vehicle management server, and then periodically send the heartbeat data packet to the vehicle management server after the communication module successfully logs in to the vehicle management server. In other words, after the communication module successfully logs in to the vehicle management server, the communication module starts to maintain the persistent connection between the communication module and the vehicle management server, to send the wakeup command and the remote control command based on the maintained persistent connection.
When Operation 1, Operation 4, and Operation 2 and/or Operation 3 are combined, the communication module may log in to the vehicle management server, and then, after the communication module successfully logs in to the vehicle management server, periodically send, to the vehicle management server, a heartbeat data packet carrying the valid network address or the changed network address, so that the vehicle management server parses the heartbeat data packet to obtain the valid network address or the changed network address.
When Operation 1 and Operation 5 are combined, the communication module may log in to the vehicle management server, and then send the latest updated in-vehicle key to the vehicle management server periodically or in real time after the communication module successfully logs in to the vehicle management server, so that the vehicle management server and the communication module encrypt a to-be-synchronized message in a login state, to improve message transmission security.
When Operation 1, Operation 5, and Operation 2 and/or Operation 3 are combined, the communication module may log in to the vehicle management server, send the latest updated in-vehicle key to the vehicle management server periodically or in real time after the communication module successfully logs in to the vehicle management server, encrypt the valid network address or the changed network address based on the latest updated in-vehicle key, and send encrypted information to the vehicle management server, so that the vehicle management server can also obtain the valid network address or the changed network address through decryption based on the latest updated in-vehicle key, and send, to the communication module based on the valid network address or the changed network address, the wakeup command and the remote control command that are encrypted based on the latest updated in-vehicle key. Such combination is equivalent to periodically updating the in-vehicle key in a process of maintaining the persistent connection. Even if the communication module and the vehicle management server are in a connected state for a long period of time, by updating the in-vehicle key at intervals, a probability that an unauthorized device obtains the latest in-vehicle key can still be reduced, accuracy of identifying, by the communication module, an unauthorized message encrypted based on a historical in-vehicle key can be improved, the unauthorized device can be prevented from intruding into the persistent connection to perform unauthorized control on the communication module, and security of the persistent connection can be effectively improved.
When Operation 1, Operation 4, Operation 5, and Operation 2 and/or Operation 3 are combined, the communication module may log in to the vehicle management server, send the latest updated in-vehicle key to the vehicle management server periodically or in real time after the communication module successfully logs in to the vehicle management server, encrypt the valid network address or the changed network address based on the latest updated in-vehicle key, and send, to the vehicle management server, a heartbeat data packet carrying the encrypted network address, so that the vehicle management server parses the heartbeat data packet to obtain the encrypted valid network address or the changed network address, obtains the valid network address or the changed network address through decryption based on the latest updated in-vehicle key, and sends, to the communication module based on the valid network address or the changed network address, the wakeup command and the remote control command that are encrypted based on the latest updated in-vehicle key.
When Operation 1 and Operation 6 are combined, the communication module may log in to the vehicle management server, and then periodically perform authentication with the vehicle management server after the communication module successfully logs in to the vehicle management server. Through such combination, security authentication can be periodically performed on the communication module and the vehicle management server that are in a login state, to help ensure reliability of login states of the communication module and the vehicle management server.
When Operation 1, Operation 5, and Operation 6 are combined, the communication module may log in to the vehicle management server, periodically perform authentication with the vehicle management server after the communication module successfully logs in to the vehicle management server, and update the in-vehicle key in an authentication process. In this way, an operation of negotiating the in-vehicle key is performed in a periodic authentication process, to save resources of the communication module.
When Operation 1, Operation 6, and Operation 2 and/or Operation 3 are combined, the communication module may log in to the vehicle management server, periodically perform authentication with the vehicle management server after the communication module successfully logs in to the vehicle management server, and periodically send the valid network address or the changed network address to the vehicle management server when authentication succeeds, so that the vehicle management server obtains the secure valid network address or the changed network address.
When Operation 1, Operation 4, Operation 5, Operation 6, and Operation 2 and/or Operation 3 are combined, the communication module may log in to the vehicle management server, periodically perform authentication with the vehicle management server after the communication module successfully logs in to the vehicle management server, synchronize the updated in-vehicle key in an authentication process, encrypt the valid network address or the changed network address based on the latest updated in-vehicle key when authentication succeeds, and send, to the vehicle management server, a heartbeat data packet carrying the encrypted network address, so that the vehicle management server parses the heartbeat data packet to obtain the encrypted valid network address or the changed network address, obtains the valid network address or the changed network address through decryption based on the latest updated in-vehicle key, and sends, to the communication module based on the valid network address or the changed network address, the wakeup command and the remote control command that are encrypted based on the latest updated in-vehicle key.

It should be understood that the foregoing content describes examples of only several possible combinations, rather than all combinations. All new operations that can be obtained by combining one or more of Operation 1 to Operation 6 fall within the protection scope of this application. Details are not listed in this application.

Step 202: The communication module enables, based on the wakeup command, the communication module to enter the wakeup state.

In step 202, the communication module may first wake up another program in the communication module based on the wakeup command, so that the communication module is switched to a normal working state. In addition, the communication module may further wake up another component in the vehicle. The another component may be a to-be-controlled component corresponding to the remote control command, or may be all components in the vehicle. That the another component is all the components in the vehicle is used as an example. A wakeup process may specifically include: The communication module first sends, to a vehicle-mounted gateway in a dormant state, an authentication message carrying the wakeup command. The vehicle-mounted gateway is switched to a working state after being triggered by the authentication message of the communication module. Then, the vehicle-mounted gateway determines whether the authentication message is authorized (for example, determines whether the communication module encrypts the authentication message based on an authorized in-vehicle key); and if the authentication message is authorized, and converts the wakeup command into a CAN message based on a controller area network (controller area network, CAN) message format used for interaction between the components in the vehicle, and sends the CAN message to each domain controller in the vehicle. Each domain controller wakes up an ECU managed in a domain of each domain controller. Certainly, the CAN message sent to each domain controller also needs to be encrypted based on an in-vehicle key corresponding to each domain controller. An in-vehicle key corresponding to any domain controller is usually preset in the vehicle before the vehicle is delivered from a factory, or may be periodically synchronized, for updating, by using the domain controller and the ECU in the domain of the domain controller after the vehicle is delivered from a factory.

Step 203: The communication module sends a control message to the component in the vehicle based on the remote control command.

In step 203, after the communication module determines that the another component in the vehicle is woken up (for example, receives a wakeup success response returned by the vehicle-mounted gateway), the communication module may generate the control message based on the remote control command, and send the control message to the vehicle-mounted gateway. The vehicle-mounted gateway converts the control message into a CAN message based on the CAN message format, and sends the CAN message to a domain controller in which a to-be-controlled ECU is located, to send the control message to the to-controlled ECU by using the domain controller.

It should be understood that step 202 and step 203 are described by using only an example in which the communication module separately sends the wakeup command and the remote control command. In another solution, the communication module may alternatively generate an authentication message carrying both the wakeup command and the control message corresponding to the remote control command, and send the authentication message to the vehicle-mounted gateway. After the vehicle-mounted gateway determines that the authentication message is authorized, the vehicle-mounted gateway wakes up each ECU based on the wakeup command and the control message, and then directly controls a to-be-controlled ECU, to complete remote control.

Step 204: The component in the vehicle starts the component or performs an operation indicated by the remote control command, based on the control message.

In step 204, after receiving the control message, the to-be-controlled ECU may perform a start or a control operation corresponding to the remote control command. The operation includes but is not limited to starting an air conditioner to run (in some cases, an engine also needs to be started to drive the air conditioner to run), remotely unlocking/locking a vehicle door, remotely seeking the vehicle (for example, remotely controlling the vehicle to automatically drive to a location of the user, or remotely flashing a light and honking, so that the user finds the vehicle), or remotely opening/locking a vehicle window.

For example, when the domain controller determines that the to-be-controlled ECU successfully completes remote control, the domain controller may further return a control success response to the vehicle management server by sequentially using the vehicle-mounted gateway and the communication module, and then the vehicle management server returns the control success response to the user terminal, or returns the control success response to the user terminal by sequentially using the vehicle-mounted gateway and the communication module, to display the control success response to the user terminal.

In Embodiment 1, the remote control command is sent to the communication module when the communication module in the vehicle is in the dormant state, so that the communication module immediately performs remote control after waking up the component in the vehicle, to effectively avoid a delay introduced when the remote control command is sent after the component in the vehicle is woken up and gives a response, and help improve remote control timeliness.

The following further describes specific implementation of the remote control method in this application based on Embodiment 2 and Embodiment 3.

### Embodiment 2

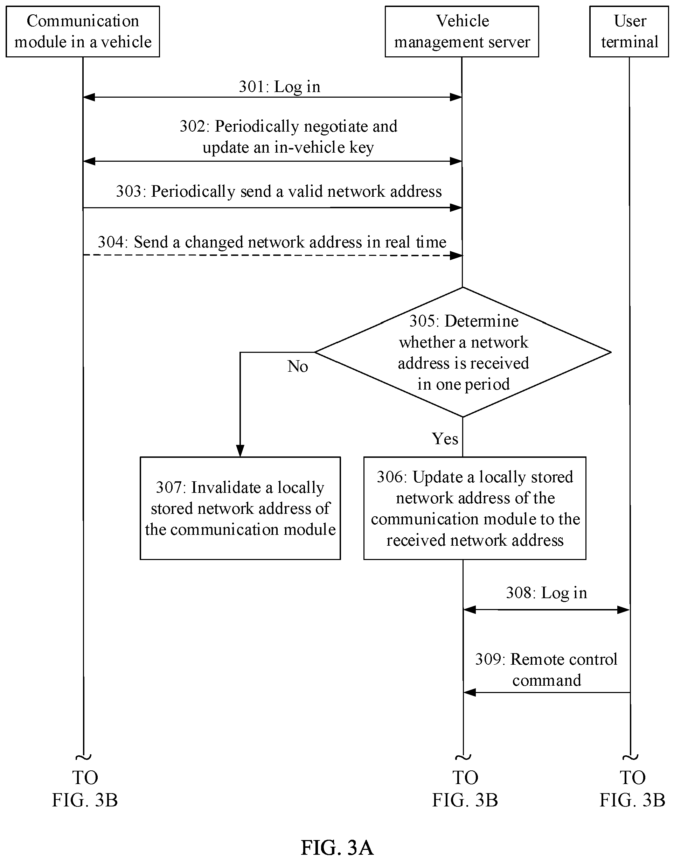

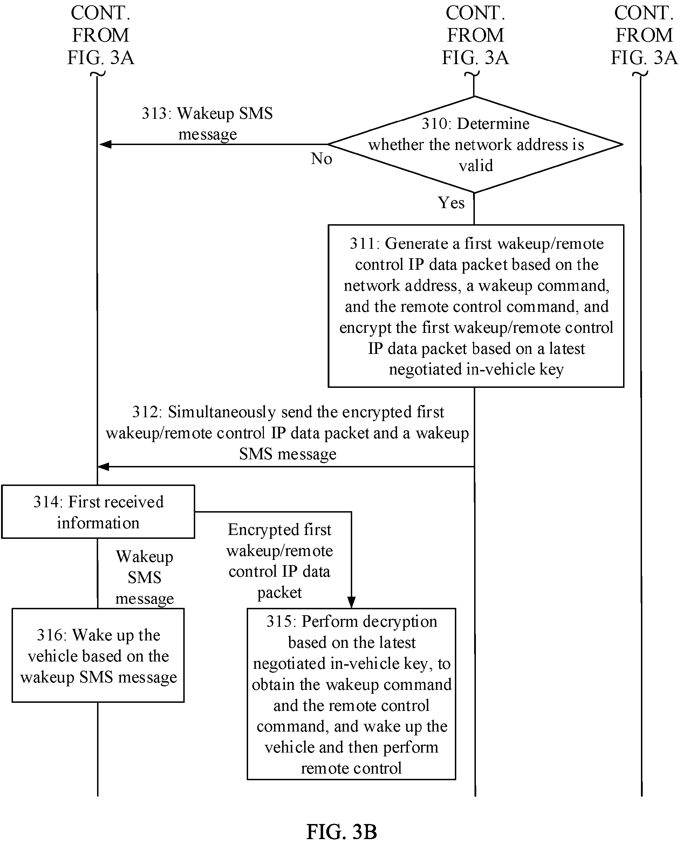

FIG. 3A and FIG. 3B are an example schematic flowchart of a remote control method according to Embodiment 2 of this application. The method is applicable to a vehicle management server, a communication module in a vehicle, and a user terminal, for example, the vehicle management server 110, the communication module 121 in the vehicle 120, and the user terminal 130 shown in FIG. 1. As shown in FIG. 3A and FIG. 3B, a procedure includes the following steps.

Step 301: The communication module logs in to the vehicle management server.

For example, for a specific login process, refer to step a to step c:
Step a: The communication module sends a login request to the vehicle management server when logging in to the vehicle management server for a first time, where the login request carries to-be-authenticated information and a network address of the communication module. The to-be-authenticated information may include version information of a communication protocol, and may further include a vehicle identification number (vehicle identification number, VIN) or other landmark information that can indicate the vehicle or the communication module. The to-be-authenticated information is usually preset in the communication module in the vehicle before the vehicle is delivered from a factory.
Step b: The vehicle management server verifies the to-be-authenticated information in the login request based on a preset authentication algorithm, and if verification succeeds, determines that the login request is authorized. The vehicle management server allows the communication module to log in, stores the network address of the communication module, and returns a login success response to the communication module based on the network address. The preset authentication algorithm may be set by a person skilled in the art based on experience, and may be synchronized to the communication module in advance, so that the communication module can also set the to-be-authenticated information based on the preset authentication algorithm.

For example, the communication module and the vehicle management server may complete login in a two-way authentication method. Specifically, when logging in to the vehicle management server for the first time, the communication module initiates the login request to the vehicle management server. After receiving the login request, the vehicle management server sends a public key certificate of the vehicle management server to the communication module. The communication module reads the public key certificate of the vehicle management server, to obtain a public key of the vehicle management server, and sends a public key certificate of the communication module to the vehicle management server. The vehicle management server decrypts the public key certificate of the communication module based on a root certificate, to obtain a public key of the communication module. Then, the communication module sends, to the vehicle management server, an encryption scheme supported by the communication module. The vehicle management server selects, based on an encryption scheme supported by the vehicle management server and the encryption scheme supported by the communication module, an encryption scheme that can be supported by the two parties, and sends the encryption scheme to the communication module after the encryption scheme is encrypted based on the public key of the communication module. After decrypting the received encryption scheme by using a private key of the communication module, the communication module generates a random number, uses the random number as an in-vehicle key (that is, an in-vehicle key obtained through initial negotiation) for subsequent communication with the vehicle management server, encrypts the random number based on the public key of the vehicle management server, and sends the encrypted random number to the vehicle management server. The vehicle management server obtains the random number through decryption based on a private key of the vehicle management server, and uses the random number as an in-vehicle key for subsequent communication with the communication module. In this way, the vehicle management server and the communication module communicate with each other based on an in-vehicle key negotiated by the two parties in a subsequent communication process. The public key certificate of the vehicle management server, the private key of the vehicle management server, the root certificate, and the encryption scheme supported by the vehicle management server may be preset in the vehicle management server by a person skilled in the art, and the public key certificate of the communication module, the private key of the communication module, and the encryption scheme supported by the communication module may be preset in the communication module by a research and development person before the vehicle is delivered from a factory.

Step c: After receiving the login success response returned by the vehicle management server, the communication module determines that the communication module successfully logs in to the vehicle management server, that is, the communication module successfully establishes a connection to the vehicle management server, and the communication module may access a resource in the vehicle management server through the connection, for example, a voice service resource, a map navigation resource, or an online query resource.

Step 302: The communication module and the vehicle management server obtain an updated in-vehicle key through negotiation based on a first preset period.

In an optional implementation, the in-vehicle key may be updated in a manner in which the communication module actively applies to the vehicle management server for negotiation based on the first preset period. To be specific, the communication module maintains a first timer, and timing duration of the first timer is period duration of one first preset period. After successfully logging in to the vehicle management server, the communication module may start the first timer. Each time the first timer counts to corresponding timing duration, the communication module may send a key update request to the vehicle management server, and restart the first timer. The key update request may also carry the network address of the communication module, so that the communication module and the vehicle management server synchronize the network address of the communication module in a process of negotiating the in-vehicle key, to further improve accuracy of the network address that is of the communication module and that is stored in the vehicle management server. The key update request may also be encrypted based on an in-vehicle key obtained through a previous time of negotiation. In this way, after receiving the key update request, the vehicle management server may obtain the key update request in a plaintext form through decryption based on the in-vehicle key obtained through the previous time of negotiation, and then verify whether identity information that is of the communication module and that is carried in the key update request is authorized. If the identity information is authorized, the vehicle management server may set a new in-vehicle key for the communication module, encrypt the new in-vehicle key based on the in-vehicle key obtained through the previous time of negotiation, and send the encrypted new in-vehicle key to the communication module based on the locally stored network address of the communication module (referring to step 303), to complete an update operation of the in-vehicle key. The new in-vehicle key may be selected randomly or sequentially by the vehicle management server from a preset in-vehicle key set, may be generated based on a preset algorithm, or may be obtained through deformation based on some information carried in the key update request. This is not specifically limited.

It should be noted that, the communication module may continuously apply, based on the first preset period, to negotiate the in-vehicle key, without considering whether a previous time of application succeeds. In this way, even if a problem occurs in an operation of negotiating the in-vehicle key between the communication module and the vehicle management server, and consequently, data exchange is interrupted (for example, the vehicle management server generates the new in-vehicle key, but does not successfully deliver the new in-vehicle key to the communication module; consequently, the communication module uses an old in-vehicle key, and the vehicle management server uses the new in-vehicle key; although the communication module and the vehicle management server can receive data, the communication module and the vehicle management server cannot decrypt data of each other to complete data exchange), negotiation of a subsequently generated new in-vehicle key can be completed in a manner in which the communication module subsequently actively applies for negotiation, to restore exchange of normal data between the communication module and the vehicle management server.

Step 303: The communication module sends a valid network address to the vehicle management server based on a second preset period.

In this embodiment of this application, after the communication module logs in to the vehicle management server for the first time, the vehicle management server may locally store the network address of the communication module, and may update the network address periodically or in real time in a subsequent interaction process with the communication module. In this way, when remote control needs to be performed, the vehicle management server can obtain the network address of the communication module by directly querying the vehicle management server. The network address of the communication module may be stored in the vehicle management server in a form of a correspondence between an identifier of a communication module and a network address, and the correspondence may be represented as any one or more of a table, a picture, or a data stack. In this way, even if the vehicle management server simultaneously establishes connections to a plurality of communication modules, the vehicle management server can accurately implement communication with any communication module based on the correspondence.

In an optional implementation, the valid network address of the communication module may be updated in a manner in which the communication module actively reports a heartbeat data packet to the vehicle management server based on a second preset period. To be specific, the communication module maintains a second timer, and timing duration of the second timer is second preset duration. After successfully logging in to the vehicle management server, the communication module may start the second timer. Each time the second timer counts to corresponding timing duration, the communication module may send the heartbeat data packet to the vehicle management server, and restart the second timer. The heartbeat data packet may carry a network address of the vehicle management server, to send the heartbeat data packet to the vehicle management server, and carry the valid network address of the communication module. In this way, after logging in to the vehicle management service, the communication module periodically sends, to the vehicle management server, the heartbeat data packet carrying the valid network address, so that not only a persistent connection between the communication module and the vehicle management server can be maintained, but also the vehicle management server can learn of the current valid network address of the communication module in a timely manner. This manner is equivalent to that an operation of synchronizing the valid network address is implemented by being integrated into a process of maintaining the persistent connection, without a need to additionally setting an operation of periodically synchronizing the valid network address, to help reduce communication overheads between the vehicle management server and the communication module.

It should be noted that, in this embodiment of this application, the persistent connection may be maintained in a manner in which the communication module actively initiates the heartbeat data packet, and whether the heartbeat data packet is successfully sent is not concerned. In this way, even if a problem occurs on the persistent connection at a specific moment (for example, the network address of the communication module changes, but the changed network address is not successfully notified to the vehicle management server, and consequently, a message sent by the vehicle management server based on an old network address cannot be notified to the communication module), the persistent connection between the communication module and the vehicle management server is merely interrupted but does not end. Provided that the problem is resolved, the vehicle management server can restore the persistent connection with the communication module based on a valid network address carried in a heartbeat data packet to be sent by the communication module in a next timing period, to continue to communicate with the communication module.

For example, after establishing the connection to the vehicle management server, the communication module may further perform step 304:
Step 304: The communication module sends the changed network address to the vehicle management server in real time.

In step 304, the communication module may further monitor the network address of the communication module, and once finding that the network address of the communication module changes, report the changed network address to the vehicle management server in real time. Correspondingly, after receiving the changed network address sent by the communication module, the vehicle management server may also update the locally stored network address of the communication module based on the changed network address. In this way, even if the communication module switches the network address at a sending interval of two heartbeat data packets, the vehicle management server can obtain a latest network address in a timely manner, to help improve accuracy of the network address locally stored in the vehicle management server.

It should be noted that, the changed network address may be sent to the vehicle management server in a separate message format, or may be carried in the heartbeat data packet and sent to the vehicle management server. This is not specifically limited. When both the valid network address and the changed network address are carried in the heartbeat data packet and sent to the vehicle management server, the communication module may restart the second timer by using a newly sent heartbeat data packet as a reference. For example, the communication module starts the second timer after sending a heartbeat data packet carrying the valid network address at a specific moment. If a heartbeat data packet carrying the changed network address is sent in real time before the second timer counts to the second preset duration, the communication module may restart the second timer, to avoid repeatedly sending a same network address in a short period of time, and effectively reduce a communication loss of the communication module.

It should be understood that, in this embodiment of this application, the communication module may directly send the valid network address or the changed network address to the vehicle management server in a plaintext form, or may send the valid network address or the changed network address to the vehicle management server in a ciphertext form after the valid network address or the changed network address is encrypted based on a latest negotiated in-vehicle key. This is not specifically limited.

Step 305: The vehicle management server determines whether the vehicle management server receives, in a second preset period, a network address sent by the communication module; and performs step 306 if the vehicle management server receives the network address, or performs step 307 if the vehicle management server does not receive the network address.

For example, the vehicle management server may further maintain a third timer, and timing duration of the third timer is also the second preset duration. Each time the vehicle management server receives a network address (which may be a valid network address or a changed network address) sent by the communication module, the vehicle management server may start the third timer. Before the third timer counts to the timing duration of the third timer, if the vehicle management server receives a new valid network address or a changed network address, the vehicle management server determines that the network address sent by the communication module is received in the second preset period. When the timer counts to the timing duration of the third timer, if the vehicle management server receives no new valid network address or the changed network address, the vehicle management server determines that the network address sent by the communication module is not received in the second preset period. For example, the vehicle management server starts the third timer after receiving the valid network address at a specific moment. If the vehicle management server receives a changed network address before the third timer counts to the second preset duration, the vehicle management server may perform step 306, and restart the third timer. If the vehicle management server does not receive a new valid network address or a changed network address until the restarted third timer counts to the second preset duration, the vehicle management server determines that the vehicle management server may perform step 307, and restart the third timer.

It should be noted that, the second preset period may be set by the vehicle management server and delivered to the communication module, or may be set by the communication module and synchronized to the vehicle management server, or may be set in the vehicle management server and the communication module by a person skilled in the art. This is not specifically limited.

Step 306: The vehicle management server updates the locally stored network address of the communication module to the received network address.

In step 306, when the vehicle management server can receive, in a second preset period, the valid network address or the changed network address sent by the communication module, it indicates that a network status of the vehicle management server and a network status of the communication module in the current second preset period are good, and there is a high probability that the network address is a current network address of the communication module. In this case, the vehicle management server may update the locally stored network address of the communication module based on the received network address, for example, directly replace the locally stored network address with the received network address, or after locally adding the received network address, add an invalidity label to an original network address, and add a validity label to the newly added network address, or after locally adding the received network address, mark the received network address with a receiving timestamp. The received network address may be different from the original network address (for example, the vehicle moves to another area), or may be the same as the original network address (for example, the vehicle is still in an original area). This is not limited.

In an optional implementation, after successfully updating the network address, the vehicle management server may further return an update success response to the communication module based on the updated network address. Correspondingly, each time the communication module sends a network address, the communication module may further wait the vehicle management server to return an update success response. If the update success response returned by the vehicle management server is not received in preset waiting duration (far less than the second preset duration), it indicates that a current time of sending of the network address fails, and the communication module may resend a current valid network address. If the communication module receives the update success response through a preset quantity of times of resending operation, it indicates that a phenomenon that a previous time of sending fails is probably caused by some accidental factors, for example, an unexpected packet loss in the previous time of sending. In this case, the persistent connection interrupted due to these accidental factors can be restored in a timely manner through the foregoing resending operation of the communication module. If no update success response is received through a preset quantity of times of resending operation, it indicates that a phenomenon that a previous time of sending fails is probably because a communication link is abnormal. For example, the communication module is currently located in an area with weak network coverage. In this case, resending of the communication module may end, and the heartbeat data packet carrying the network address may be sent after a next second preset period arrives, so that a previously interrupted persistent connection is restored after the communication module moves to an area with good network coverage again, to reduce unnecessary communication consumption. In addition, if no update success response is received in a plurality of first preset periods, it indicates that a fault that cannot be automatically rectified may exist in a communication link between the communication module and the vehicle management server, for example, the communication module or the hardware communication module in the vehicle management server is damaged. In this case, the communication module may further generate an alarm message and send the alarm message to an operation and maintenance node, to rectify a fault of communication with the vehicle management server in a timely manner.

Step 307: The vehicle management server invalidates the locally stored network address of the communication module.

In step 307, when the vehicle management server cannot receive, in a second preset period, the heartbeat data packet carrying the network address and that is sent by the communication module, it indicates that a problem occurs in the communication link between the vehicle management server and the communication module in the current second preset period. The problem may be caused by a fault in a hardware communication module in the vehicle management server or the communication module, a poor network status, or the like. There is a high probability that the vehicle management server cannot exchange data with the communication module in a network manner in a current time period. In this case, the vehicle management server may directly invalidate the locally stored network address of the communication module, to temporarily interrupt a network communication manner between the vehicle management server and the communication module. Then, the vehicle management server enters a waiting phase, and after receiving, again at a specific moment, the heartbeat data packet carrying the network address and that is sent by the communication module, the vehicle management server may re-validate the locally stored network address, and update the network address to the received new network address, to restore the network communication manner between the vehicle management server and the communication module.

Step 308: The user terminal logs in to the vehicle management server.

Step 309: The user terminal sends a remote control command (that is, a first remote control command) to the vehicle management server.

For example, when determining that there is a remote control requirement, the user terminal may encrypt the remote control command based on a user key, and then send the encrypted remote control command to the vehicle management server. The remote control command of the user terminal is encrypted, so that not only a risk of tampering with the remote control command in a remote transmission process can be reduced, but also the vehicle management server can accurately identify an authorized remote control command sent by an authorized terminal, to effectively improve security of remotely controlling the vehicle.

In this embodiment of this application, interaction between the user terminal and the vehicle management server may be implemented by using a target application (application, APP) on the user terminal. The target app may be an app that is specially developed to implement a remote control function, or may be an app that is on the user terminal and that is used for another application function, for example, an intelligent vehicle. When the target app is an app that is on the user terminal and that is used for another application function, a program of the remote control method in this application may be preset in the target app of a new version. In this way, the target app can have a function of remotely controlling a vehicle, provided that the user performs an operation of upgrading the target app.

The following describes, by using an example, an interface operation procedure of sending a remote control command to the vehicle management server based on the target app on the user terminal.

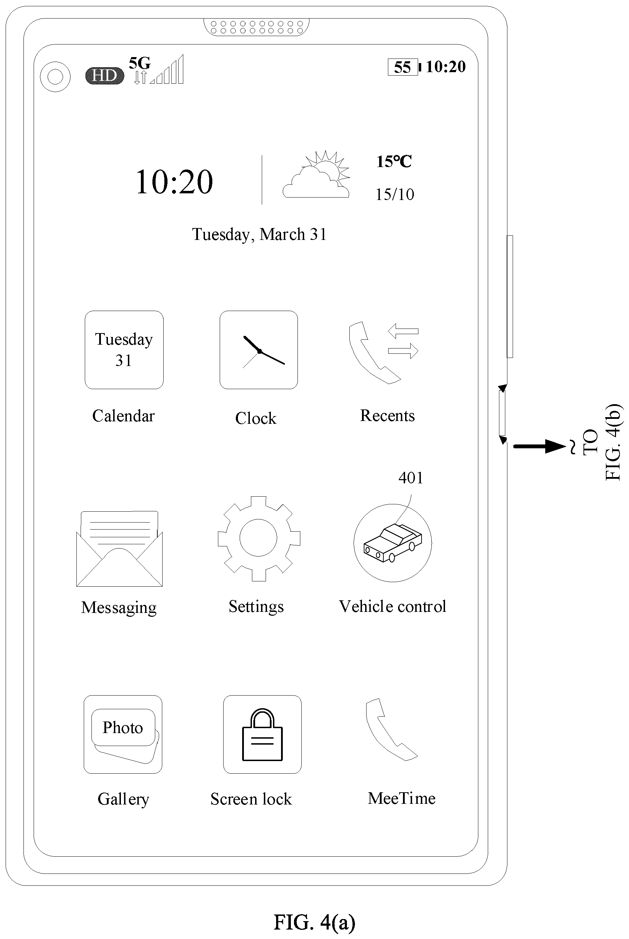

FIG. 4(a) is an example schematic diagram of an interface of a user terminal according to an embodiment of this application. As shown in FIG. 4(a), a plurality of applications such as Calendar, Clock, Recents, Messaging, Settings, Gallery, Screen lock, MeeTime, and the target app (that is, Vehicle control app 401 shown in FIG. 4(a)) may be set in the interface of the user terminal. When the user needs to execute the remote control command, the user may tap the target app, and then register and log in (if the user has registered a user account before, the user may directly log in). After the vehicle management server verifies that the user account is authorized, a home screen of the target app is entered. The user account may usually include a user name and a password. The password may be a fixed password set by the user, or may be an SMS message verification code, face information, iris information, fingerprint information, or the like. This is not limited.

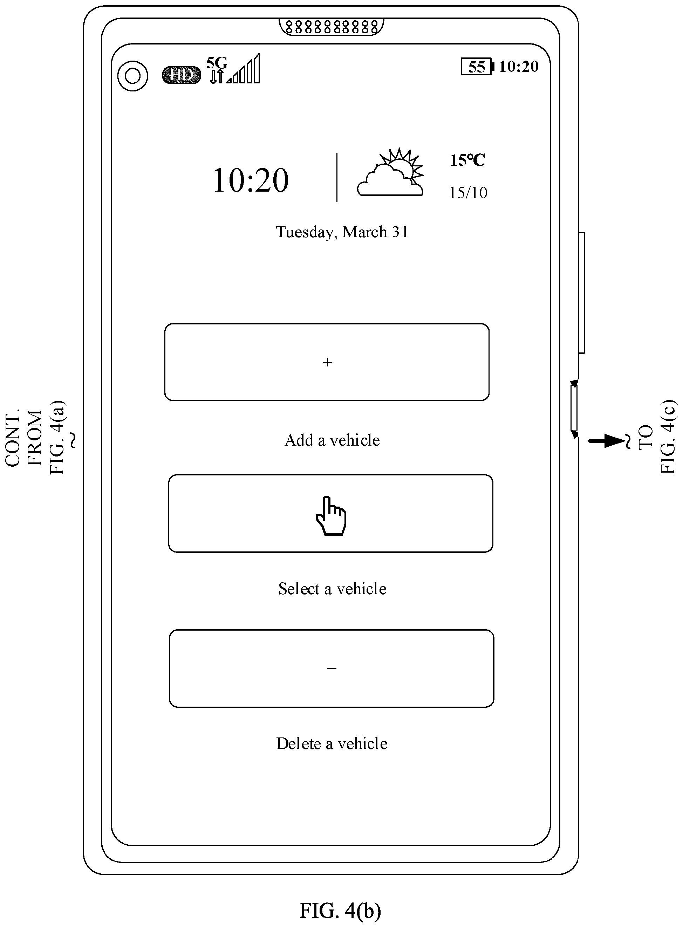

FIG. 4(b) is an example schematic diagram of a home screen of a target app according to an embodiment of this application. As shown in FIG. 4(b), there are a plurality of functional buttons such as a button "Add a vehicle", a button "Select a vehicle", and a button "Delete a vehicle" on the home screen of the target app. When the user needs to remotely control a vehicle that has been added to the target app, the user may directly tap the button "Select a vehicle" on the home screen, to enter the vehicle selection interface. When the user needs to remotely control a vehicle that is not added to the target app before, the user may tap the button "Add a vehicle" on the home screen to switch to a vehicle addition interface, enter information about a to-be-added vehicle (for example, a VIN of the vehicle) in the interface, bind the to-be-added vehicle to the user account in the vehicle management server, and return to the home screen to tap the button "Select a vehicle" to enter the vehicle selection interface. In this case, the vehicle selection interface displays information about a vehicle that is just added by the user.

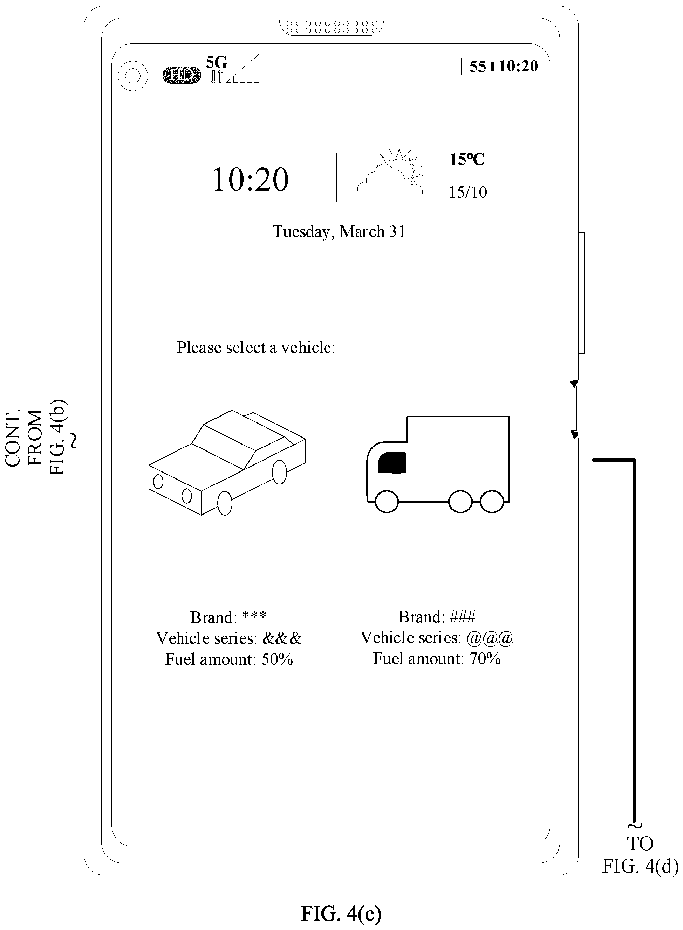

FIG. 4(c) is an example schematic diagram of a vehicle selection interface of a target app according to an embodiment of this application. As shown in FIG. 4(c), the vehicle selection interface may display related information of at least one vehicle. The related information may include attribute information such as a picture, a brand, or a vehicle series of the vehicle, and may further include performance information such as a fuel amount or a service life. The user may select, in the vehicle selection interface, a vehicle that the user wants to remotely control, to enter a remote control interface.

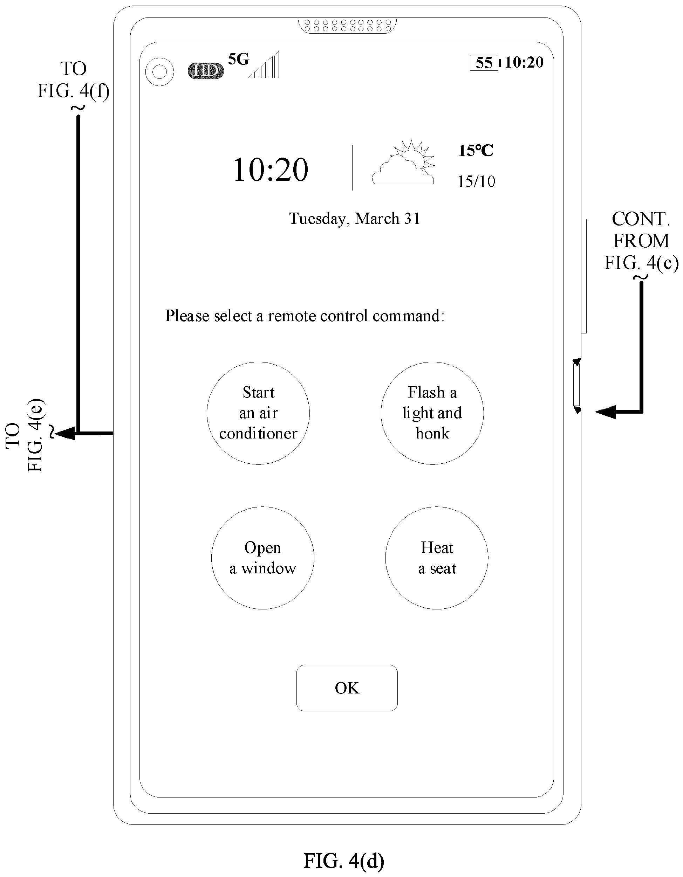

FIG. 4(d) is an example schematic diagram of a remote control interface of a target app according to an embodiment of this application. As shown in FIG. 4(d), the remote control interface displays one or more remote control commands. For example, the one or more remote control commands may include a command "Start an air conditioner", a command "Flash a light and honk", a command "Open a window", and a command "Heat a seat" shown in FIG. 4(d), and may further include another remote control command such as a command "Unlock a vehicle door", a command "Open a trunk", a command "Start an engine", or a command "Purify air". The user may tap, in the remote control interface, a remote control command that the user wants to execute. After detecting such a tap operation, the target app may generate a remote control request based on the tapped remote control command, send the remote control request to the vehicle management server, and switch to a command execution interface based on response content returned by the vehicle management server.

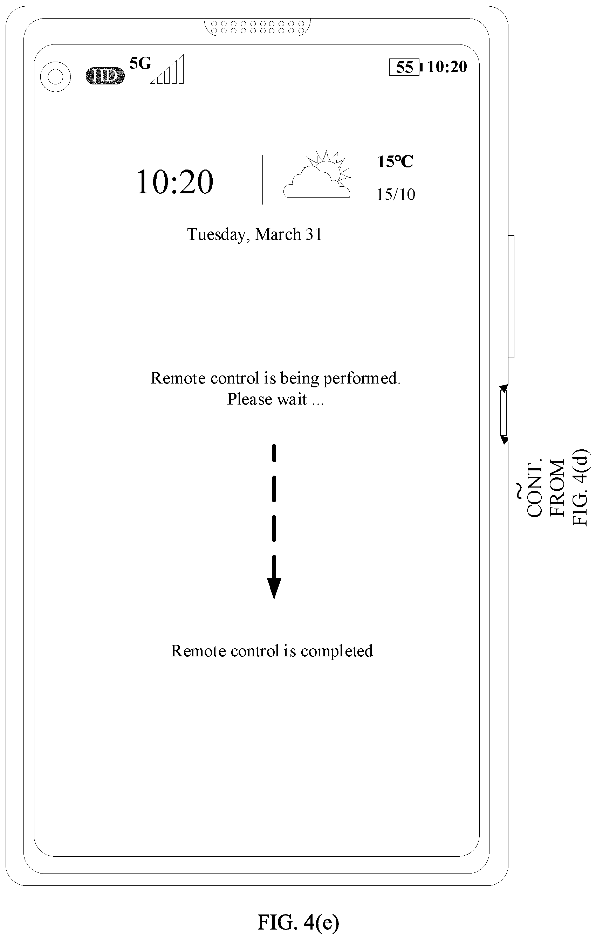

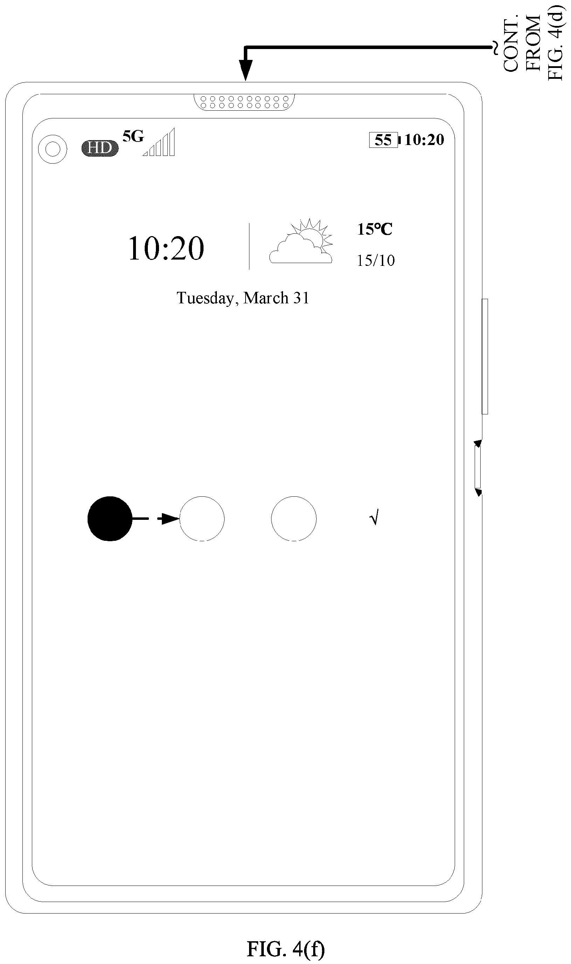

FIG. 4(e) and FIG. 4(f) are schematic diagrams of two command execution interfaces of a target app according to an embodiment of this application. As shown in FIG. 4(e), before the remote control command is successfully executed, an interface may display text information "Remote control is being performed. Please wait ... ". After the remote control command is successfully executed, that is, after the target app receives an execution success response returned by the vehicle management server, the interface may display text information "Remote control is completed". As shown in FIG. 4(f), the target app not only can display, to the user, whether execution is completed, but also can display an execution progress in a form of a circle in black. It should be understood that FIG. 4(e) and FIG. 4(f) show merely two example descriptions, and any solution in which the user can be prompted, in an interface display manner, of whether execution is completed currently falls within the protection scope of this application. Solutions are not listed one by one in this application.

Step 310: The vehicle management server determines whether the locally stored network address of the communication module is valid, and performs step 311 if the network address is valid, or performs step 313 if the network address is invalid.

Step 311: The vehicle management server generates a first wakeup/remote control IP data packet based on the locally stored network address of the communication module, a wakeup command, and the remote control command, and encrypts the first wakeup/remote control IP data packet based on a latest negotiated in-vehicle key, to obtain the encrypted first wakeup/remote control IP data packet.

In step 311, the first wakeup/remote control IP data packet may include a wakeup IP data packet and a remote control IP data packet, or may include a wakeup and remote control IP data packet. The wakeup data packet is an IP data packet that is generated based on the network address of the communication module and the wakeup command and that indicates the vehicle to wake up. The remote control IP data packet is an IP data packet that is generated based on the network address of the communication module and the remote control command and that indicates a component to start or execute a first operation. The wakeup and remote control IP data packet is an IP data packet that is generated based on the network address of the communication module, the wakeup command, and the remote control command and that indicates the vehicle to wake up and then indicate a component to start or perform a first operation. In this way, the vehicle management server sends the wakeup command and the remote control command to the communication module in real time in a network manner. Compared with a manner in which a command is sent by using an SMS message, in this manner, an SMS message forwarding delay introduced when the SMS message is forwarded by an SMS message center on an operator side can be avoided, and timeliness of waking up the vehicle and remotely controlling the vehicle can be effectively improved.

In an optional implementation, after generating an IP data packet (for example, a remote control IP data packet or a wakeup and remote control IP data packet) carrying the remote control command, the vehicle management server may further encrypt the IP data packet based on the in-vehicle key, and then send the encrypted IP data packet to the communication module. The vehicle management server may encrypt information in the IP data packet other than the network address of the communication module based on the in-vehicle key, to ensure that the encrypted IP data packet can still be sent to the communication module. For example, all information other than the network address of the communication module may be encrypted, to effectively ensure transmission security of all data, or only the remote control command may be encrypted, but other information is not encrypted, to reduce working pressure of the vehicle management server. The IP data packet that is used to remotely control the vehicle and that is between the vehicle management server and the communication module is encrypted, so that not only a risk of tampering with the remote control command in a transmission process can be reduced, but also the communication module can accurately identify an unauthorized control command sent by an unauthorized vehicle management server or an unauthorized terminal, to effectively improve security of remotely controlling the vehicle.

It should be understood that an IP data packet (for example, a wakeup IP data packet) carrying the wakeup command may also be encrypted based on the in-vehicle key and then sent, to improve accuracy of identifying an unauthorized wakeup command by the communication module, reduce an unnecessary power waste, and improve a battery life of the vehicle.

Step 312: The vehicle management server simultaneously sends the encrypted first wakeup/remote control IP data packet and a wakeup SMS message to the communication module.

In step 312, the first wakeup/remote control IP data packet is sent to the communication module in a network manner, and the wakeup SMS message is forwarded by an SMS message center on an operator side to the communication module in an SMS message form.

It should be understood that the vehicle management server may send only the first wakeup/remote control IP data packet, but does not send the wakeup SMS message. This is not specifically limited.

Step 313: The vehicle management server sends a wakeup SMS message to the communication module.

In step 313, when the network address that is of the communication module and that is stored in the vehicle management server is invalid, it means that a network link between the vehicle management server and the communication module is temporarily interrupted, and the vehicle management server currently cannot indicate, in a network manner, the vehicle to wake up. Therefore, the vehicle management server may send the wakeup SMS message but does not send a first wakeup/remote control IP data packet. In this way, unnecessary communication overheads between the vehicle management server and the communication module can be reduced, and the vehicle can be successfully woken up in a conventional form of the wakeup SMS message.

Step 314: The communication module determines whether first received information is the encrypted first wakeup/remote control IP data packet or the wakeup SMS message.

Step 315 is performed when the encrypted first wakeup/remote control IP data packet is first received; or
step 316 is performed when the wakeup SMS message is first received.

In step 314, theoretically, when the network status is good, the encrypted first wakeup/remote control IP data packet can be successfully sent to the communication module in only approximately 500 ms (millisecond), and the wakeup SMS message can be sent to the communication module in at least 15s (second). Therefore, there is a high probability that the communication module first receives the encrypted first wakeup/remote control IP data packet. Certainly, when the network status is poor or another accidental event occurs, the encrypted first wakeup/remote control IP data packet may not be sent to the communication module within 15 seconds. Therefore, the communication module may alternatively first receive the wakeup SMS message.

Step 315: The communication module decrypts the encrypted first wakeup/remote control IP data packet based on the latest negotiated in-vehicle key, to obtain the wakeup command and the remote control command (that is, a second remote control command), and wakes up the vehicle and then directly performs remote control, based on the wakeup command and the remote control command.

In step 315, when the communication module first receives the encrypted first wakeup/remote control IP data packet, the communication module may directly discard a subsequently received wakeup SMS message, without a need to parse the wakeup SMS message, to save computing resources.

Step 316: The communication module wakes up the vehicle based on the wakeup SMS message.

In step 316, when the communication module first receives the wakeup SMS message, it means that a problem exists in the network link between the communication module and the vehicle management server. The problem may be caused by a network address updating error between the vehicle management server and the communication module, or may be caused by a key negotiation error between the vehicle management server and the communication module. In this case, the network address that is of the communication module and that is stored in the vehicle management server may be different from a real network address of the communication module, and an in-vehicle key stored in the vehicle management server may also be different from an in-vehicle key stored in the communication module. Therefore, after waking up the vehicle, the communication module may further re-perform authentication with the vehicle management server, that is, re-negotiate with the vehicle management server to update the in-vehicle key, and resend a current network address to the vehicle management server, so that the vehicle management server and the communication module can obtain a same and accurate in-vehicle key and network address through negotiation. Then, the vehicle management server may send the remote control command to the communication module based on the accurate in-vehicle key and network address, and the communication module may also execute the remote control command based on the accurate in-vehicle key and network address, to complete remote control.

For example, after the communication module wakes up the vehicle, in a period from re-performing authentication in the conventional procedure to obtaining the remote control command, if the communication module further receives the encrypted first wakeup/remote control IP data packet, it means that a current network link is restored to normal. Instead of starting remote control after conventional authentication is completed, the communication module may directly end the conventional procedure, and directly start remote control based on a remote control command obtained by parsing the encrypted first wakeup/remote control IP data packet, to complete remote control as soon as possible.

In Embodiment 2, because a wireless coverage effect of the SMS message is better than a network coverage effect of a data service, the wakeup command is sent to the communication module in both a network form and an SMS message form, so that the wakeup command can be quickly transferred to the communication module when a network is good, to improve efficiency of waking up the vehicle, and the vehicle can be successfully woken up by using a wakeup SMS message with a better network coverage effect when a network is not good. Compared with a manner in which the wakeup command is first sent in a network form and then the vehicle is woken up in a form of a wakeup SMS message when waking up the network fails, in a wakeup solution in Embodiment 2, a success rate of remote control is synchronously maintained when a wakeup speed is increased, to meet both a requirement for quickly waking up the vehicle and a requirement for successfully waking up the vehicle, and effectively reduce a delay of waking up the vehicle.

### Embodiment 3

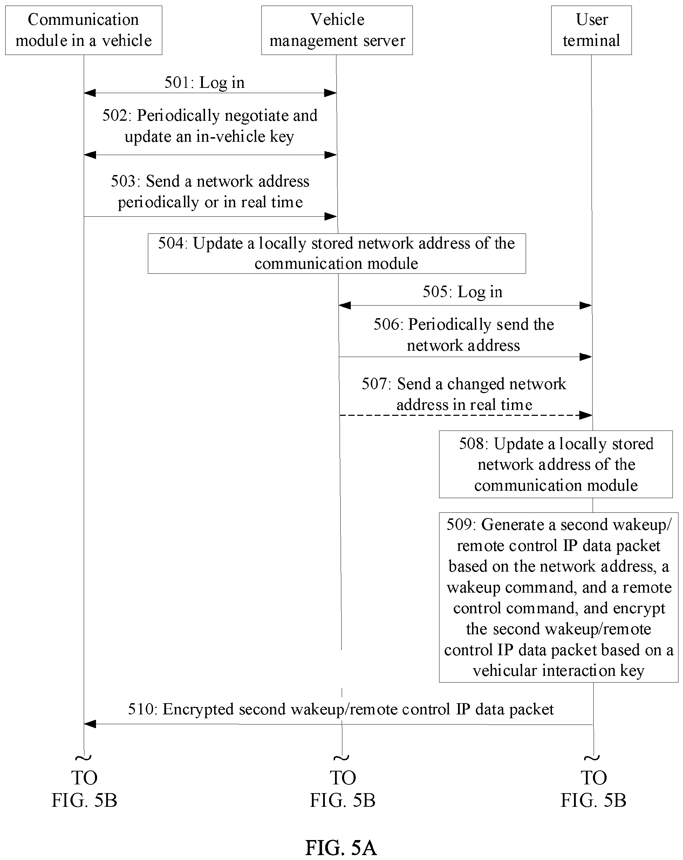

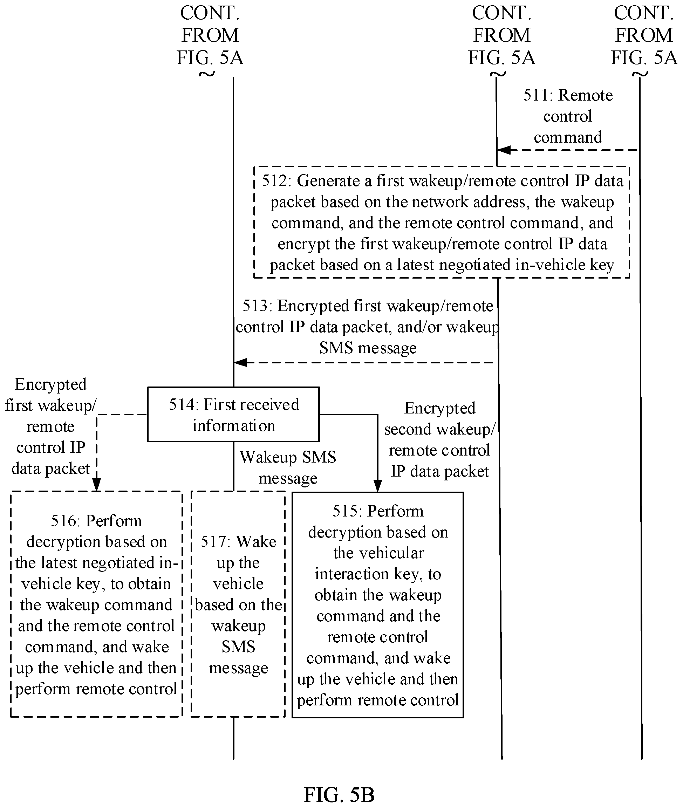

FIG. 5A and FIG. 5B are an example schematic flowchart of a remote control method according to Embodiment 3 of this application. The method is applicable to a vehicle management server, a communication module in a vehicle, and a user terminal, for example, the vehicle management server 110, the communication module 121 in the vehicle 120, and the user terminal 130 shown in FIG. 1. As shown in FIG. 5A and FIG. 5B, a procedure includes the following steps.

Step 501: The communication module logs in to the vehicle management server.

Step 502: The communication module and the vehicle management server obtain an updated in-vehicle key through negotiation based on a first preset period.

Step 503: The communication module sends a valid network address to the vehicle management server based on a second preset period, or may send a changed network address to the vehicle management server in real time.

Step 504: The vehicle management server updates a locally stored network address of the communication module, specifically including: if the vehicle management server receives, in a second preset period, a network address sent by the communication module, the vehicle management server updates the locally stored network address to the received network address, and keeps the received network address valid; or if the vehicle management server does not receive, in a second preset period, a network address sent by the communication module, the vehicle management server sets the locally stored network address to be invalid.

Step 505: The user terminal logs in to the vehicle management server.

For example, for a specific operation that the user terminal logs in to the vehicle management server in a target app, refer to the following steps:
Step 1: After driving a newly purchased vehicle home, a user may enter registration information in a target app of a mobile phone. The registration information may include a user account and a login password, and may further include other information. This is not specifically limited. The user account may be a mobile phone number of the user, may be an identifier allocated by the vehicle management server to the user, or may be other information that can be used to uniquely identify the user.
Step 2: The target app of the user terminal generates a registration request based on the registration information entered by the user, and sends the registration request to the vehicle management server. In addition, to ensure that the registration request is not tampered with in a sending process, the target app may further encrypt the registration request, and then send the encrypted registration request to the vehicle management server. Alternatively, to improve registration efficiency, the target app may compress the registration request, and then send the compressed registration request to the vehicle management server. Alternatively, the target app may compress the registration request, then encrypt the compressed registration request, and finally send the encrypted compressed registration request to the vehicle management server, to improve registration security when the registration request is quickly transmitted.
Step 3: After receiving the registration request, the vehicle management server parses the registration request to obtain the user account and the login password, and then creates a folder locally. The folder may be named after the user account of the user, or may be named after another unique identifier that can identify the user. The vehicle management server may store, in the folder, the user account and the login password that are carried in the registration request. For example, before generating a folder corresponding to the user account, the vehicle management server may further first query whether the folder corresponding to the user exists in the vehicle management server. If the folder exists, it indicates that the user has registered the user account before. Therefore, the vehicle management server may directly return a registration failure response message to the target app. If the folder does not exist, it indicates that the user has not registered a user account. Therefore, the vehicle management server may create a folder and perform a corresponding storage operation. After completing storage, the vehicle management server determines that the user account is successfully registered, so that the vehicle management server may send a registration success response message to the target app.
Step 4: The target app of the user equipment displays the registration success response message to the user.
Step 5: The user may directly switch from a registration success response interface to a login interface, or may close the target app and then re-open the target app, to directly enter the login interface. The user enters the user account and the login password in the login interface, and taps a login button, to trigger the target app to generate a login request and send the login request to the vehicle management server.
Step 6: The vehicle management server finds a corresponding folder based on a user account carried in the login request, and verifies whether the login password entered by the user is a login password corresponding to the user account. If the login password entered by the user is the login password corresponding to the user account, verification succeeds, and the vehicle management server may return home screen information to a target app of a target terminal, so that the target app loads the home screen information to switch to a home screen. If the login password entered by the user is not the login password corresponding to the user account, verification fails, and the vehicle management server may return a login failure response message to the target app of the target terminal, so that the target app displays a login failure to the user.

It should be noted that a procedure of interaction between the target app and the vehicle management server in this part of content is complex, and is not closely related to an application point of this solution. Therefore, in this embodiment of this application, only "Log in" shown in FIG. 5A is used to briefly represent this part of content. However, this does not limit a specific implementation solution of login in this application.

Step 506: The vehicle management server sends the locally stored network address of the communication module to the user terminal based on a third preset period.

For example, the vehicle management server may further maintain a fourth timer, and timing duration of the fourth timer is a third preset period. After the user terminal successfully logs in to the vehicle management server, the vehicle management server may first feed back the locally stored network address of the communication module to the user terminal, and start the fourth timer. Each time the fourth timer counts to the corresponding timing duration, the vehicle management server may resend the locally stored network address of the communication module to the user terminal, and restart the fourth timer. When the network address is sent, if the locally stored network address is valid, the vehicle management server may send specific content of the network address to the user terminal; or if the locally stored network address is invalid, the vehicle management server may send invalidity indication information to the user terminal without sending specific content of the network address, or may directly restart the fourth timer without performing a sending operation, and resend specific content of the network address when the fourth timer counts to timing duration and the network address is valid. In this way, regardless of whether the vehicle management server periodically synchronizes only the valid network address to the user terminal or periodically synchronizes both the valid network address and the invalidity indication information to the user terminal, the user terminal can learn of a latest network address of the communication module in a timely manner when a network link of the communication module is good, and the user terminal can learn of a current abnormality situation of the network link when a network of the communication module is poor, to provide a decision basis for whether the user terminal subsequently sends the network address in a network manner.

For example, after the user terminal successfully logs in to the vehicle management server, the vehicle management server may further perform step 507:
Step 507: The vehicle management server sends a locally stored changed network address of the communication module to the user terminal in real time.

In step 507, the vehicle management server may further monitor a network address stored in the vehicle management server, and once finding that the network address stored in the vehicle management server changes, send the changed network address to the user terminal in real time. Correspondingly, after receiving the changed network address sent by the vehicle management server, the user terminal may also update the locally stored network address of the communication module based on the changed network address. In this way, even if the network address locally stored in the vehicle management server changes within a duration interval of one third preset period, the user terminal can obtain the changed latest network address in a timely manner, to improve accuracy of the locally stored network address of the user terminal.

It should be noted that, when the vehicle management server not only periodically sends the network address, but also sends the changed network address in real time, the vehicle management server may restart the fourth timer based on latest sent information. For example, the vehicle management server starts the fourth timer after sending the locally stored network address at a specific moment. If the vehicle management server further sends the changed network address in real time before the fourth timer counts to third preset duration, the vehicle management server may restart the fourth timer, to avoid repeatedly sending a same network address in a short period of time, and effectively reduce communication losses of the vehicle management server.

For example, in step 506 and step 507, to keep the vehicle management server and the user terminal to update the network address consistently, the vehicle management server may maintain a third timer instead of the fourth timer. After the user terminal logs in to the vehicle management server, each time the vehicle management server receives a valid network address or a changed network address sent by the communication module, the vehicle management server may send the received valid network address or the changed network address to the user terminal when updating the locally stored network address, to synchronously implement an operation that the user terminal synchronizes the network address of the communication module with the vehicle management server at a same moment.

It should be understood that the vehicle management server and the user terminal may exchange the network address of the communication module in a plaintext form, or may exchange the network address of the communication module in a ciphertext form after the network address of the communication module is encrypted based on a user key. This is not specifically limited.

Step 508: The user terminal updates the locally stored network address of the communication module.

In step 508, when the vehicle management server sends the network address or the invalidity indication information to the user terminal, if the user terminal receives the network address, the vehicle management server may directly update the locally stored network address of the communication module to the received network address; or if the user terminal receives the invalidity indication information, the vehicle management server may set the locally stored network address of the communication module to be invalid. When the vehicle management server sends the network address but does not send the invalidity indication information to the user terminal, the user terminal may further maintain a fifth timer, and timing duration of the fifth timer is also the third preset period. Each time the user terminal receives a network address (which may be a valid network address sent periodically, or may be a changed network address sent in real time) sent by the vehicle management server, the user terminal may restart the fifth timer. Before the fifth timer counts to the timing duration of the fifth timer, if the user terminal receives a new network address, the user terminal may update the locally stored network address to the newly received network address. When the fifth timer counts to the timing duration of the fifth timer, if the user terminal receives no new network address, the user terminal may set the locally stored network address to be invalid.

Step 509: When there is a remote control requirement, the user terminal generates a second wakeup/remote control IP data packet based on the locally stored network address of the communication module, the wakeup command, and the remote control command, and encrypts the second wakeup/remote control IP data packet based on a vehicular interaction key, to obtain the encrypted second wakeup/remote control IP data packet.

Step 510: The user terminal sends the encrypted second wakeup/remote control IP data packet to the communication module.

In step 509 and step 510, the vehicular interaction key is used for encryption, to complete data exchange between the communication module and the user terminal, so that not only security of data exchange between the communication module and the user terminal can be ensured, but also the communication module can accurately identify, as much as possible, a control command forged by an unauthorized user terminal, to improve security of remotely controlling the vehicle.

In a specific implementation, when the target app of the user terminal detects that the user selects a remote control command, the target app may first query whether the locally stored network address of the communication module is valid. If the locally stored network address of the communication module is valid, it indicates that there is a high probability that the communication module is currently in an area with a good network, and the vehicle can be woken up and controlled more quickly in a network form. Therefore, the target app of the user terminal may place the network address in a packet header of an IP data packet, and place the wakeup command and the selected remote control command in a packet body of one IP data packet or respectively place the wakeup command and the selected remote control command in packet bodies of two IP data packets, to generate the second wakeup/remote control IP data packet, and send the second wakeup/remote control IP data packet to the communication module in a network form. If the locally stored network address of the communication module is invalid, it indicates that the communication module may be currently in an area with a poor network, and it is very difficult for the user terminal to wake up and control the vehicle in a network form in a current time period. Therefore, the target app of the user terminal may not generate the second wakeup/remote control IP data packet, but directly complete wakeup and remote control of the vehicle in a conventional procedure.

For example, the user terminal may further grant use permission of a Messaging app to the target app in advance. In this way, when it is determined that the network address of the communication module is invalid, the target app of the user terminal may also invoke permission of the Messaging app to directly send a wakeup SMS message to the vehicle of the user, for example, simultaneously send the second wakeup/remote control IP data packet and the wakeup SMS message to the communication module. In this way, in this example, the user terminal can indicate, in a network form and an SMS message form, the vehicle to wake up, so that not only a probability that the vehicle is successfully woken up can be ensured when the vehicle is quickly woken up, but also the user terminal independently completes entire control logic of the communication module, without a need to perform forwarding by the vehicle management server, to further improve remote control timeliness when reducing communication losses of the user terminal.

In an optional implementation, the user terminal may further perform step 511 to step 513.

Step 511: When sending the encrypted second wakeup/remote control IP data packet, the user terminal sends the remote control command (that is, a first remote control command) to the vehicle management server.

Step 512: The vehicle management server generates a first wakeup/remote control IP data packet based on the locally stored network address of the communication module, the wakeup command, and the remote control command, and encrypts the first wakeup/remote control IP data packet based on a latest negotiated in-vehicle key, to obtain the encrypted first wakeup/remote control IP data packet.

Step 513: The vehicle management server sends the encrypted first wakeup/remote control IP data packet and/or the wakeup SMS message to the communication module.

In step 513, the vehicle management server may perform a sending operation in any one of the following manners:
Sending manner 1: The vehicle management server sends the first wakeup/remote control IP data packet but does not send the wakeup SMS message. In this way, even if the second wakeup/remote control IP data packet sent by the user terminal cannot be successfully sent to the communication module because a network link between the user terminal and the communication module is abnormal, the wakeup command and the remote control command can be quickly sent to the communication module in a network form of the first wakeup/remote control IP data packet provided that a network link between the vehicle management server and the communication module is normal. In other words, the vehicle management server and the user terminal each send a wakeup/remote control IP data packet to the communication module, to ensure, as much as possible, that the communication module quickly receives the wakeup command and the remote control command in a network form.
Sending manner 2: The vehicle management server sends the wakeup SMS message but does not send the first wakeup/remote control IP data packet. This manner may be applicable to a scenario in which the user terminal cannot send the wakeup SMS message because the target app of the user terminal does not have permission to invoke the Messaging app. In this scenario, the vehicle management server sends the wakeup command in an SMS message form, so that when the network of the communication module is poor, a wakeup operation can be performed as much as possible by using a normal SMS message procedure, to increase a probability that the vehicle is successfully woken up. In addition, in this sending manner, the vehicle management server independently sends the wakeup SMS message in an SMS message form, and the user terminal independently sends the wakeup command and the remote control command in a network manner, so that working pressure of the vehicle management server and the user terminal can be dispersed when a coverage of both the network form and the SMS message form are ensured, to reduce processing resources of the vehicle management server and the user terminal.
Sending manner 3: The vehicle management server simultaneously sends the first wakeup/remote control IP data packet and the wakeup SMS message. First, in this manner, the vehicle management server and the user terminal each send a wakeup/remote control IP data packet, to increase a probability that the communication module receives the wakeup command and the remote control command in a network form. In addition, in this manner, the vehicle management server sends the wakeup SMS message as a supplementary mechanism of a network sending manner, so that when the communication module cannot receive the wakeup/remote control IP data packet from the vehicle management server or the user terminal because the network of the communication module is poor, the communication module is switched to a normal SMS message procedure as soon as possible to wake up the vehicle, to ensure a success rate of waking up the vehicle when reducing a remote control delay.

It can be learned that, in step 511 to step 513, in addition to direct wakeup and control of the user terminal, the remote control command is sent to the vehicle management server to indicate the vehicle management server to perform indirect wakeup and control. In this way, wakeup and control operations in a plurality of ways can be performed, to increase a probability that the vehicle is successfully woken up and the vehicle is controlled.

Step 514: The communication module determines whether first received information is an encrypted wakeup/remote control IP data packet or the wakeup SMS message.

Step 515 is performed when the encrypted second wakeup/remote control IP data packet is first received;
step 516 is performed when the encrypted first wakeup/remote control IP data packet is first received; or
step 517 is performed when the wakeup SMS message is first received.

Step 515: The communication module decrypts the encrypted second wakeup/remote control IP data packet based on the vehicular interaction key, to obtain the wakeup command and the remote control command (that is, a third remote control command), and wakes up the vehicle and then directly performs remote control, based on the wakeup command and the remote control command.

In step 515, if the communication module first receives the encrypted second wakeup/remote control IP data packet, it indicates that a transmission effect of the network link between the communication module and the user terminal is better than a transmission effect of another link or an SMS message. Therefore, after determining that execution of remote control is completed, the communication module may directly return a remote control result to the user terminal on the network link between the communication module and the user terminal, without a need to forward the remote control result through the vehicle management server, to transmit the remote control result to the user more quickly, and improve user experience of performing remote control by using a mobile phone.

Step 516: The communication module decrypts the encrypted first wakeup/remote control IP data packet based on the in-vehicle key that is obtained through latest negotiation, to obtain the wakeup command and the remote control command (that is, a second remote control command), and wakes up the vehicle and then directly performs remote control, based on the wakeup command and the remote control command.

In step 516, if the communication module first receives the encrypted first wakeup/remote control IP data packet, it indicates that a transmission effect of the network link between the communication module and the vehicle management server is better than a transmission effect of another link or an SMS message, and a problem may occur in the network link between the communication module and the user terminal. Therefore, after determining that execution of remote control is completed, the communication module may return a remote control result to the vehicle management server on the network link to the vehicle management server, so that the vehicle management server forwards the remote control result to the user terminal.

In step 515 and step 516, when the communication module first receives any encrypted wakeup/remote control IP data packet, the communication module may directly discard a subsequently received encrypted wakeup/remote control IP data packet or wakeup SMS message, to reduce computing resources.

Step 517: The communication module wakes up the vehicle based on the wakeup SMS message.

In step 517, in a period from a moment at which the communication module wakes up the vehicle in a conventional procedure to a moment at which the communication module obtains a remote vehicle-mounted command, if the communication module receives the encrypted first wakeup/remote control IP data packet or the encrypted second wakeup/remote control IP data packet, it means that a current network link is restored to normal. Instead of starting remote control after conventional authentication is completed, the communication module may directly end the conventional procedure, and directly start remote control based on a remote control command obtained by parsing the encrypted first wakeup/remote control IP data packet or the encrypted second wakeup/remote control IP data packet, to reduce a remote control relay. Certainly, if another encrypted wakeup/remote control IP data packet is further received subsequently, the another encrypted wakeup/remote control IP data packet may be directly discarded.

In Embodiment 3, the vehicle management server synchronizes the network address of the communication module to the user terminal periodically (or periodically and in real time). In this way, the user terminal can directly obtain the network address of the communication module from the user terminal when there is a remote control requirement, so that the user terminal directly wakes up and controls of the vehicle. This manner not only helps reduce a delay introduced when the vehicle management server indirectly forwards the wakeup command and the remote control command, to effectively improve remote control efficiency, but also disperses working pressure of the vehicle management server as much as possible. In addition, the wakeup command is sent to the communication module in at least two of a network form of the user terminal, an SMS message form of the user terminal, a network form of the vehicle management server, and an SMS message form of the vehicle management server, so that a probability that the communication module receives the wakeup command can be increased in a plurality of sending manners, and a possibility of successfully waking up the vehicle can be increased. In addition, the user terminal and the vehicle management server each send a wakeup command in a network form, so that the communication module can further quickly receive the wakeup command and the remote control command in a network form as much as possible, to reduce a delay of remotely controlling the vehicle.

In an optional implementation, each device in a vehicle management server, a user terminal, and a communication module in a vehicle may include an information maintenance module and a remote control module. The information maintenance module is configured to maintain some information that is used when remote control is performed, for example, a network address and a key for data exchange with another device. The remote control module is configured to complete a remote control procedure with the another device based on the information maintained by the information maintenance module. The information maintenance module and the remote control module may be respectively located in different threads, and do not interfere with each other, so that information used for remote control is updated in real time when the normal remote control procedure is maintained, to ensure both accuracy and timeliness of remote control.

The following separately describes the two modules of each device in detail.

### Vehicle management server

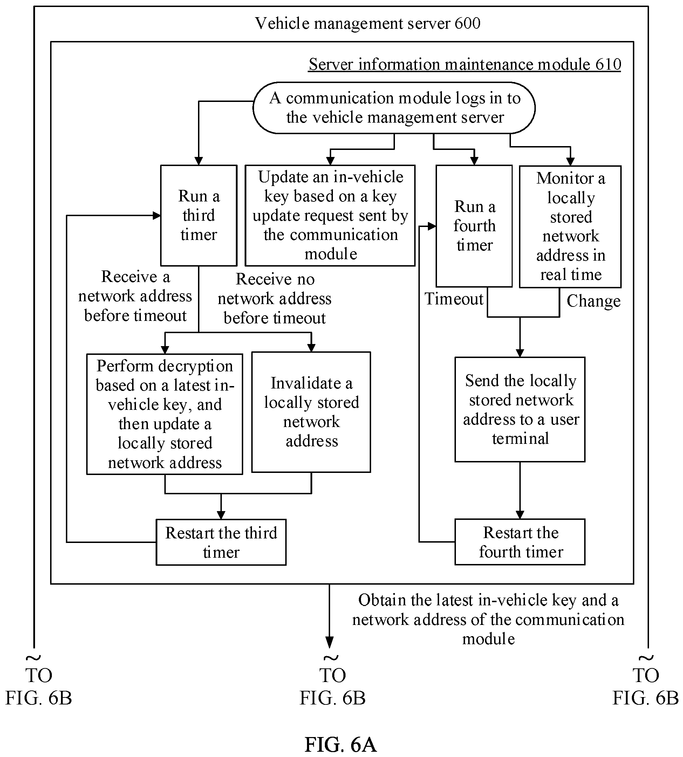

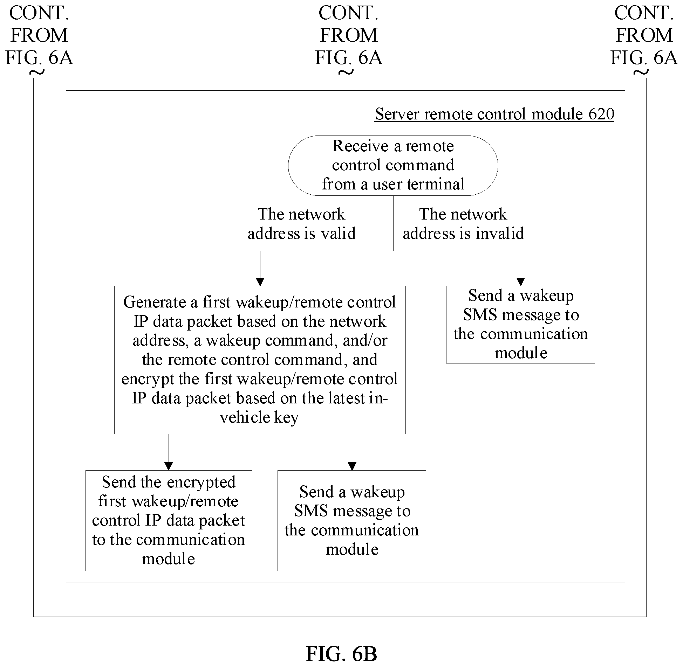

FIG. 6A and FIG. 6B is an example schematic diagram of an internal architecture of a vehicle management server according to an embodiment of this application. As shown in FIG. 6A and FIG. 6B, the vehicle management server 600 may include a server information maintenance module 610 and a server remote control module 620. The server information maintenance module 610 is configured to maintain a network address that is of a communication module and that is locally stored in the vehicle management server 600 and a latest in-vehicle key obtained through negotiation with the communication module. The server remote control module 620 is configured to initiate remote control to the communication module based on the network address of the communication module and the in-vehicle key that are maintained by the server information maintenance module 610.

As shown in FIG. 6A and FIG. 6B, in an implementation, after determining that the communication module logs in to the vehicle management server, the server information maintenance module 610 may perform the following four operations in parallel:
Operation 1: A third timer starts to run. If an encrypted network address (for example, a heartbeat data packet carrying an encrypted valid network address or an encrypted changed network address) sent by the communication module is received before the third timer expires (that is, before the third timer counts to second preset duration), the encrypted network address is decrypted based on a latest negotiated in-vehicle key, to obtain the network address of the communication module, so as to update the locally stored network address of the communication module, and the third timer is restarted. If the encrypted network address sent by the communication module is not received before the third timer expires, the locally stored network address of the communication module is set to an invalid state, and the third timer is restarted.
Operation 2: If a key update request sent by the communication module is received, a new in-vehicle key is set for the communication module, and is returned to the communication module.
Operation 3: A fourth timer starts to run. Each time the fourth timer expires (that is, the fourth timer counts to third preset duration), the locally stored network address of the communication module is sent to a user terminal, and the fourth timer is restarted.
Operation 4: The locally stored network address of the communication module is monitored in real time. Once it is detected that the network address changes, the changed network address is sent to the user terminal, and the fourth timer is restarted.

It should be noted that Operation 1 means that the vehicle management server independently receives the network address of the communication module based on the second preset duration or in real time, Operation 3 and Operation 4 means that the vehicle management server independently sends the network address of the communication module to the user terminal based on the third preset duration or in real time. The second preset duration and the third preset duration may be different duration. In another case, the second preset duration and the third preset duration may alternatively be same duration. In this case, Operation 1, Operation 3, and Operation 4 may also be replaced with the following operation:
Operation 5: The third timer starts to run. If the encrypted network address sent by the communication module is received before the third timer expires (that is, before the third timer counts to the second preset duration), after the encrypted network address is decrypted based on the latest negotiated in-vehicle key to obtain the network address of the communication module, the obtained network address is sent to the user terminal, the locally stored network address of the communication module is updated, and the third timer is restarted. If the encrypted network address sent by the vehicle management server is not received before the third timer expires, the locally stored network address of the communication module is set to the invalid state, the third timer is restarted, and invalidity indication information is sent to the user terminal to indicate the user terminal to invalidate the locally stored network address, or no information is sent, and the user terminal is waited to actively invalidate the locally stored network address.

Correspondingly, after receiving a remote control command of the user terminal, the server remote control module 620 may perform the following operations:
obtaining the latest in-vehicle key and the locally stored network address of the communication module that are maintained by the server information maintenance module 610; and if the network address of the communication module is valid, generating a first wakeup/remote control IP data packet based on the network address, the wakeup command, and/or the remote control command, encrypting the first wakeup/remote control IP data packet based on the latest in-vehicle key, and sending the encrypted first wakeup/remote control IP data packet and a wakeup SMS message to the communication module together. For example, a wakeup IP data packet is generated based on the network address and the wakeup command, a remote control IP data packet is generated based on the network address and the remote control command, and the two IP data packets are encrypted, and then sent to the communication module together with the wakeup SMS message. Alternatively, a wakeup and remote control IP data packet is generated based on the network address, the wakeup command, and the remote control command, and the wakeup and remote control IP data packet is encrypted and then sent to the communication module together with the wakeup SMS message. If the network address of the communication module is invalid, the wakeup SMS message is sent to the communication module.

### User terminal

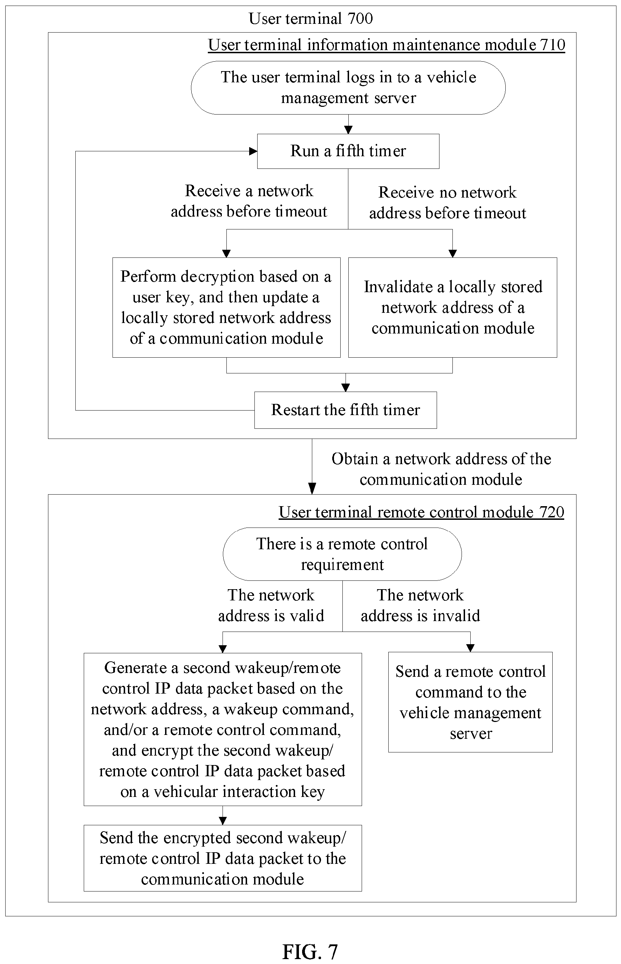

FIG. 7 is an example schematic diagram of an internal architecture of a user terminal according to an embodiment of this application. As shown in FIG. 7, a user terminal 700 may include a user terminal information maintenance module 710 and a user terminal remote control module 720. The user terminal information maintenance module 710 is configured to maintain a network address that is of a communication module and that is locally stored in the user terminal 700. The user terminal remote control module 720 is configured to initiate remote control to the communication module based on the network address that is of the communication module and that is maintained by the user terminal information maintenance module 710.

As shown in FIG. 7, in an implementation, after determining that the user terminal logs in to a vehicle management server, the user terminal information maintenance module 710 may perform the following operations:
The fifth timer starts to run. If an encrypted network address (for example, a heartbeat data packet carrying an encrypted valid network address or an encrypted changed network address) sent by the vehicle management server is received before the fifth timer expires (that is, before the fifth timer counts to the third preset duration), the encrypted network address is decrypted based on a user key, to obtain the network address of the communication module, so as to update the locally stored network address of the communication module, and the third timer is restarted. If the encrypted network address sent by the vehicle management server is not received or invalidity indication information sent by the vehicle management server is received before the fifth timer expires, the locally stored network address of the communication module is set to an invalid state, and the fifth timer is restarted.

Correspondingly, when there is a remote control requirement, the user terminal remote control module 720 may perform the following operations:
obtaining the locally stored network address that is of the communication module and that is maintained by the user terminal information maintaining module 710; and if the network address of the communication module is valid, generating a second wakeup/remote control IP data packet based on the network address, a wakeup command, and/or a remote control command, encrypting the second wakeup/remote control IP data packet based on a vehicular interaction key, and then sending the encrypted second wakeup/remote control IP data packet to the communication module. Alternatively, the remote control command may be further sent to the vehicle management server. Alternatively, when the user terminal has permission to send information, the user terminal may further send a wakeup SMS message to the communication module. If the network address of the communication module is invalid, the remote control command is sent to the vehicle management server, to send a first wakeup/remote control IP data packet in a network form through the vehicle management server, and/or send the wakeup SMS message in an SMS message form.

### Communication module in a vehicle

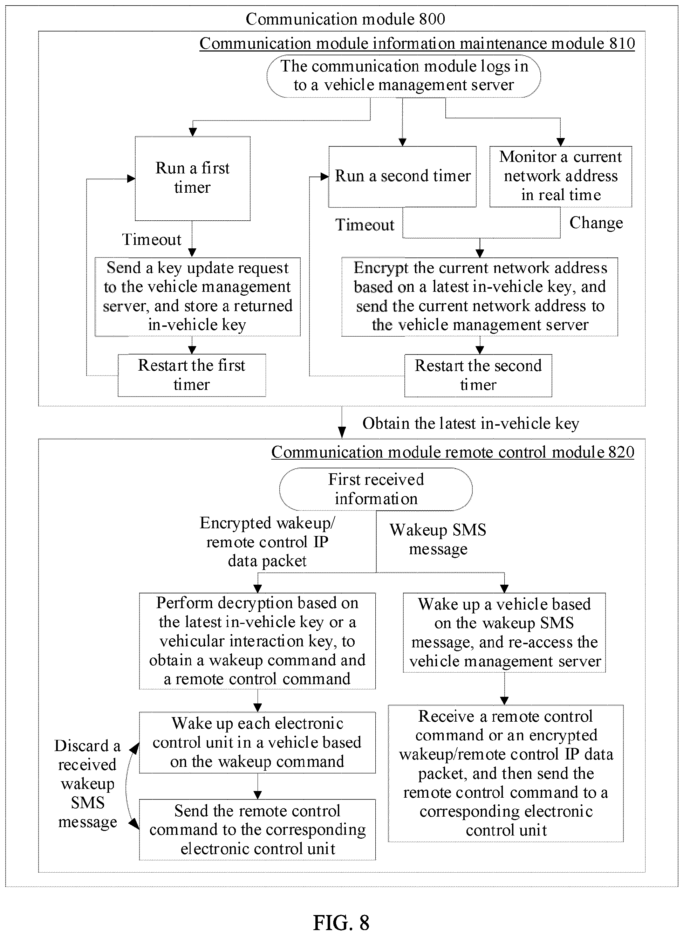

FIG. 8 is an example schematic diagram of an internal architecture of a communication module according to an embodiment of this application. As shown in FIG. 8, a communication module 800 may include a communication module information maintenance module 810 and a communication module remote control module 820. The communication module information maintenance module 810 is configured to: negotiate a latest in-vehicle key with a vehicle management server, and report a network address of the communication module to the vehicle management server. The communication module remote control module 820 is configured to directly perform remote control after a vehicle is woken up based on the in-vehicle key maintained by the communication module information maintenance module 810.

As shown in FIG. 8, in an implementation, after determining that the communication module logs in to the vehicle management server, the communication module information maintenance module 810 may perform the following three operations in parallel:
Operation 1: A first timer starts to run. Each time the first timer expires (that is, when the first timer counts to first preset duration), a key update request is sent to the vehicle management server, the in-vehicle key returned by the vehicle management server is stored, and the first timer is restarted.
Operation 2: A second timer starts to run. Each time the second timer expires (that is, when the second timer counts to second preset duration), a current network address of the communication module is encrypted based on an in-vehicle key that is latest obtained through negotiation, the encrypted network address is sent to the vehicle management server, and the second timer is restarted.
Operation 3: The network address of the communication module is monitored in real time. Once it is detected that the network address changes, the changed network address is encrypted based on the in-vehicle key that is latest obtained through negotiation, the encrypted network address is sent to the vehicle management server, and the second timer is restarted.

Correspondingly, after receiving information from the vehicle management server or the user terminal, the communication module remote control module 820 may perform the following operations:
When the first received information is an encrypted wakeup/remote control IP data packet, if the first received information is an encrypted first wakeup/remote control IP data packet sent by the vehicle management server, the encrypted first wakeup/remote control IP data packet is decrypted based on the latest in-vehicle key maintained by the communication module information maintenance module 810, to obtain a wakeup command and a remote control command; or if the first received information is an encrypted second wakeup/remote control IP data packet sent by the user terminal, the encrypted second wakeup/remote control IP data packet is decrypted based on a vehicular interaction key, to obtain a wakeup command and a remote control command. Then, each electronic control unit in the vehicle is woken up based on the wakeup command, and then the remote control command is sent to the corresponding electronic control unit, to indicate the corresponding electronic control unit to perform remote control. In addition, in this period, a subsequently received wakeup SMS message or another encrypted wakeup/remote control IP data packet may be further discarded. When the first received information is a wakeup SMS message, the vehicle is woken up and remotely controlled in a conventional procedure. To be specific, each electronic control unit in the vehicle is woken up based on the wakeup SMS message, an accurate in-vehicle key and an accurate network address of the communication module are obtained by re-accessing the vehicle management server, and after a remote control command sent by the vehicle management server is received, the remote control command is sent to the corresponding electronic control unit. In addition, before the remote control command is received, if the encrypted wakeup/remote control IP data packet is received, the conventional process may not be executed, but the encrypted wakeup/remote control IP data packet is directly decrypted, to obtain the remote control command and send the remote control command to the corresponding electronic control unit, so as to directly start remote control.

In the foregoing implementation, two parallel modules are disposed in each device to respectively perform information maintenance and remote control, so that an information management operation and a control execution operation of a remote control service can be decoupled, a probability of mutual interference between the two operations is effectively reduced, and centralized management and control of an entire remote control process is improved.

In a remote control solution in the foregoing embodiments of this application, a remote control delay can be comprehensively reduced from a plurality of perspectives. The following describes, by using specific experimental data, a case in which the remote control solution in embodiments of this application is more prominent than two common remote control solutions in the industry in terms of reducing a remote control delay. It should be noted that, in the following, only a time period consumed in a data forwarding procedure is used as a delay, and an execution time period of performing a wakeup operation and an execution time period of performing a remote control operation are not considered.

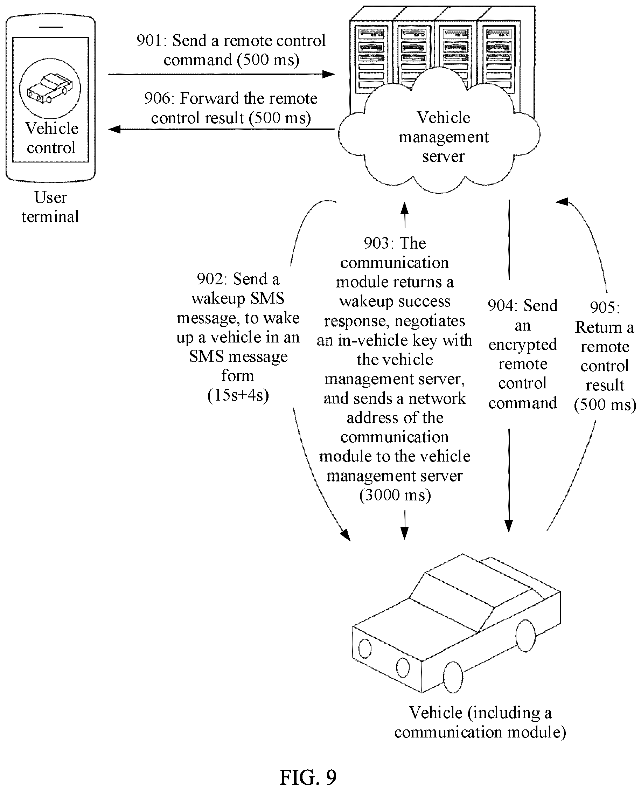

FIG. 9 is an example schematic diagram of a delay analysis of a remote control solution commonly used in the industry. As shown in FIG. 9, in the solution, remote control is mainly completed by using the following several steps.

Step 901: A user terminal sends a remote control command to a vehicle management server, where it needs to take approximately 500 ms.

Step 902: The vehicle management server sends a wakeup SMS message to a communication module in a vehicle, where it needs to take approximately 15s to transmit the wakeup SMS message by using an SMS message, and when waking up the vehicle, the communication module needs to send a wakeup command to a component that is in the vehicle and that includes a vehicle-mounted gateway, where it needs to take approximately 4s.

Step 903: After determining that the vehicle is successfully woken up, the communication module sends a wakeup success response to the vehicle management server, initiates an access procedure to the vehicle management server, and after the communication module successfully accesses the vehicle management server, exchanges a latest negotiated in-vehicle key with the vehicle management server, and sends a network address of the communication module to the vehicle management server, where it needs to take approximately 3000 ms.

Step 904: The vehicle management server sends the remote control command to the communication module in an encrypted form based on the in-vehicle key obtained through negotiation in step 903 and the received network address of the communication module, where it needs to take approximately 500 ms.

Step 905: After determining that the remote control command is executed, the communication module returns a remote control result to the vehicle management server, where it needs to take approximately 500 ms.

Step 906: The vehicle management server forwards a remote execution result to the user terminal, where it needs to take approximately 500 ms.

It can be learned from the foregoing content that, in an existing solution shown in FIG. 9, in addition to an execution time period for performing wakeup and an execution time period for performing remote control, it needs to take approximately 24s (500 ms+15s+4s+3000 ms+500 ms+500 ms+500 ms). In other words, after the user taps the remote control command on a mobile phone, the user needs to wait at least 24s to obtain the remote control result. Although a remote control delay in this solution is long, there is a high probability that the communication module can receive the wakeup SMS message in an SMS message manner, without depending on a network status of the communication module. Therefore, a success rate of wakeup is high.

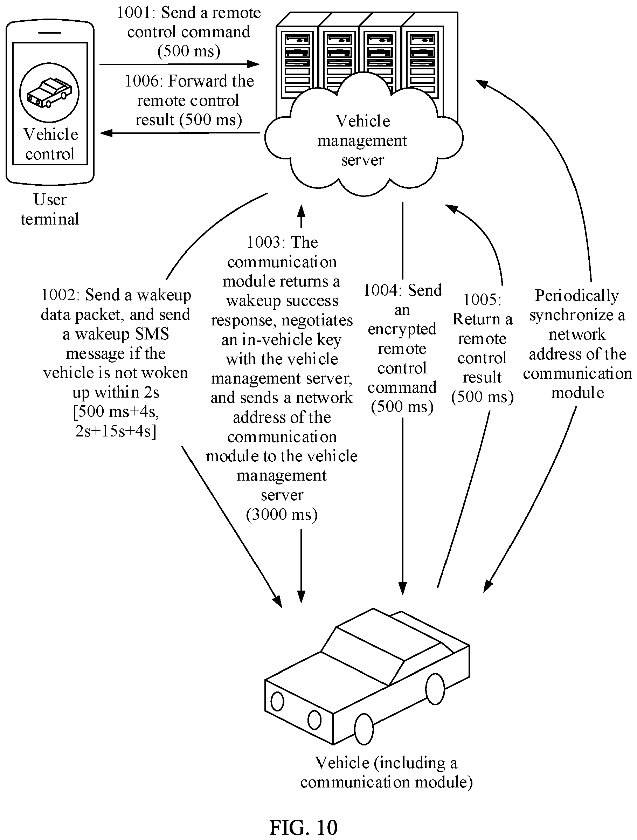

FIG. 10 is an example schematic diagram of a delay analysis of another remote control solution commonly used in the industry. In this solution, after logging in to a vehicle management server, a communication module periodically synchronizes a network address of the communication module to the vehicle management server, so that the vehicle management server can directly wake up a vehicle in a network form. As shown in FIG. 10, in the solution, remote control is mainly completed by using the following several steps.

Step 1001: A user terminal sends a remote control command to the vehicle management server, where it needs to take approximately 500 ms.

Step 1002: The vehicle management server sends a wakeup data packet to the communication module in a network form based on a latest network address periodically synchronized by the communication module, and waits for a wakeup success response of the communication module. If the wakeup success response is not received within 2s, a wakeup SMS message is sent to the communication module in an SMS message form, and the wakeup success response of the communication module is waited for. In this process, if the wakeup data packet can be successfully sent to the communication module, it needs to take approximately 500 ms to start to wake up the vehicle. When the communication module wakes up the vehicle, it needs to take approximately 4s to send a wakeup command to a component that is in the vehicle and that includes a vehicle-mounted gateway. That is, it needs to take a total of approximately 4. 5s. If the wakeup data packet cannot be successfully sent to the communication module, it needs to take approximately 21s (that is, 2s waited after the wakeup data packet is sent, 15s for sending the wakeup SMS message, and 4s when the communication module sends the wakeup command to the component in the vehicle) to start to wake up the vehicle. That is, approximately duration between 4. 5s and 21s is spent.

Step 1003: After determining that the vehicle is successfully woken up, the communication module sends the wakeup success response to the vehicle management server, exchanges a latest negotiated in-vehicle key with the vehicle management server, and sends a network address of the communication module to the vehicle management server, where it needs to take approximately 3000 ms.

Step 1004: The vehicle management server sends the remote control command to the communication module in an encrypted form based on the in-vehicle key obtained through negotiation in step 1003 and the received network address of the communication module, where it needs to take approximately 500 ms.

Step 1005: After determining that the remote control command is executed, the communication module returns a remote control result to the vehicle management server, where it needs to take approximately 500 ms.

Step 1006: The vehicle management server forwards a remote execution result to the user terminal, where it needs to take approximately 500 ms.

It can be learned from the foregoing content that, in an existing solution shown in FIG. 10, in addition to an execution time period spent for performing wakeup and an execution time periodspent for performing remote control, it needs to take approximately 9. 5s (500 ms+4. 5s+3000 ms+500 ms+500 ms+500 ms). In other words, after the user taps the remote control command on a mobile phone, the user needs to wait 9. 5s to obtain the remote control result. A shortest delay produced in this solution is significantly lower than a delay in the solution shown in FIG. 9. However, the shortest delay can be implemented only when a network communication status between the communication module and the vehicle management server is very good. When the network communication status between the communication module and the vehicle management server is poor, in this solution, wakeup is re-performed by using the wakeup SMS message only after duration of 2s is waited. In other words, in a worst situation, it needs to take approximately 26s (500 ms+2s+15s+4s+3000 ms+500 ms+500 ms+500 ms). It can be learned that, in the existing solution shown in FIG. 10, a wakeup delay is actually reduced by sacrificing a wakeup success rate, and reducing the wakeup delay and increasing the wakeup success rate cannot be both ensured.

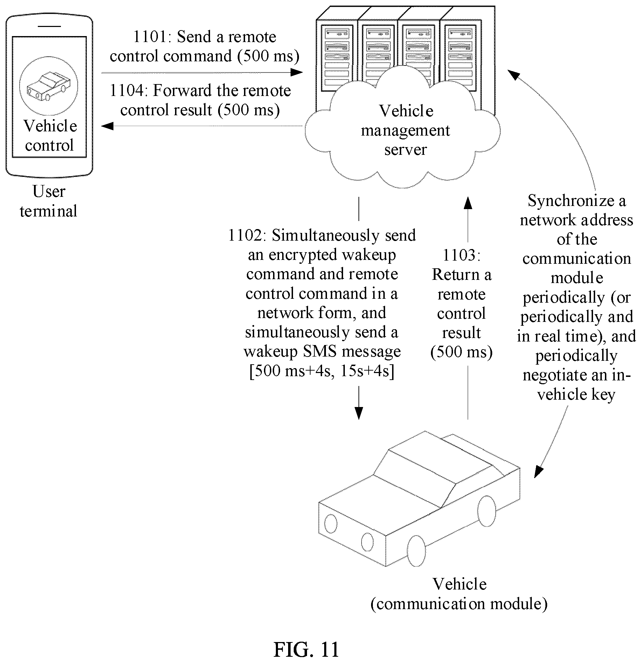

FIG. 11 is an example schematic diagram of a delay analysis of a remote control solution according to Embodiment 2 of this application. In this solution, after logging in to a vehicle management server, a communication module not only sends a network address of the communication module to the vehicle management server periodically (or periodically and in real time), but also periodically exchanges and negotiates a latest in-vehicle key with the vehicle management server, so that the vehicle management server can directly wake up a vehicle based on a latest network address and the latest in-vehicle key in a network form and then directly perform remote control. As shown in FIG. 11, in the solution, remote control is mainly completed by using the following several steps.

Step 1101: A user terminal sends a remote control command to the vehicle management server, where it needs to take approximately 500 ms.

Step 1102: The vehicle management server simultaneously sends an encrypted wakeup command and remote control command to the communication module in a network form based on the latest network address periodically synchronized by the communication module and the periodically negotiated in-vehicle key, and further sends a wakeup SMS message to the communication module in an SMS message form. In this process, if the wakeup command and the remote control command can be successfully sent to the communication module in the network form, it needs to take approximately 500 ms to start to wake up and remotely control the vehicle. When the communication module wakes up the vehicle, it needs to take approximately 4s to send a wakeup command to a component that is in the vehicle and that includes a vehicle-mounted gateway. That is, it needs to take a total of approximately 4. 5s. Even if the wakeup command and the remote control command cannot be successfully sent to the communication module in the network form, the vehicle can be woken up by directly using the simultaneously sent wakeup SMS message in an SMS message form. In other words, it needs to take 15s for transmitting the wakeup SMS message by using an SMS message and it needs to take 4s when the communication module sends the wakeup command to the component in the vehicle, and there is a total of 19s. That is, in this manner, approximately duration between 4. 5s and 19s is spent.

First, in step 1102, related information is sent in both a network manner and an SMS message manner, instead of performing sending in an SMS message manner after sending performed in a network manner fails, so that 2s that needs to be waited can be reduced when sending in the network manner fails. In addition, when the wakeup command and the remote control command can be successfully sent to the communication module in the network form, the communication module directly performs remote control after waking up the vehicle. Between the two operations, the communication module does not need to negotiate the in-vehicle key and the network address with the vehicle management server, and does not need to send the remote control command. Therefore, in this solution, 3000 ms spent for negotiating the in-vehicle key and the network address and 500 ms spent for sending the remote control command can be further reduced.

Step 1103: After determining that the remote control command is executed, the communication module returns a remote control result to the vehicle management server, where it needs to take approximately 500 ms.

Step 1104: The vehicle management server forwards the remote control result to the user terminal, where it needs to take approximately 500 ms.

It can be learned from the foregoing content that, in the solution shown in FIG. 11, in addition to an execution time period spent for performing wakeup and an execution time period spent for performing remote control, it needs to take at least approximately 6s (500 ms+4. 5 ms+500 ms+500 ms). In other words, after the user taps the remote control command on the mobile phone, the user only needs to wait as short as 6s to obtain the remote control result. It can be learned that, a shortest delay produced in this solution is 6s, which is about 75% (that is, (24-6)/24) optimized compared with a fixed delay of 24s in FIG. 9, and about 36. 8% (that is, (9. 5-6)/9. 5) optimized compared with a shortest delay of 9. 5s in FIG. 10. It is clear that a shortest delay produced in this solution is lower than that in the existing solutions shown in FIG. 9 and FIG. 10. Even if a network communication status between the communication module and the vehicle management server is poor, in this solution, the vehicle can be woken up by directly using the simultaneously sent wakeup SMS message. In other words, in a worst situation, a delay in this solution is the same as a delay in the solution in FIG. 9. In addition, in this solution, to ensure a success rate of waking up the vehicle with a shortest delay, in addition to periodically synchronize the network address of the communication module to the vehicle management server, a changed network address of the communication module is synchronized in real time, to further increase a probability that controlling the vehicle with a shortest delay succeeds. It can be learned that, in the solution shown in FIG. 11, reducing a wakeup delay and increasing a wakeup success rate can be both ensured.

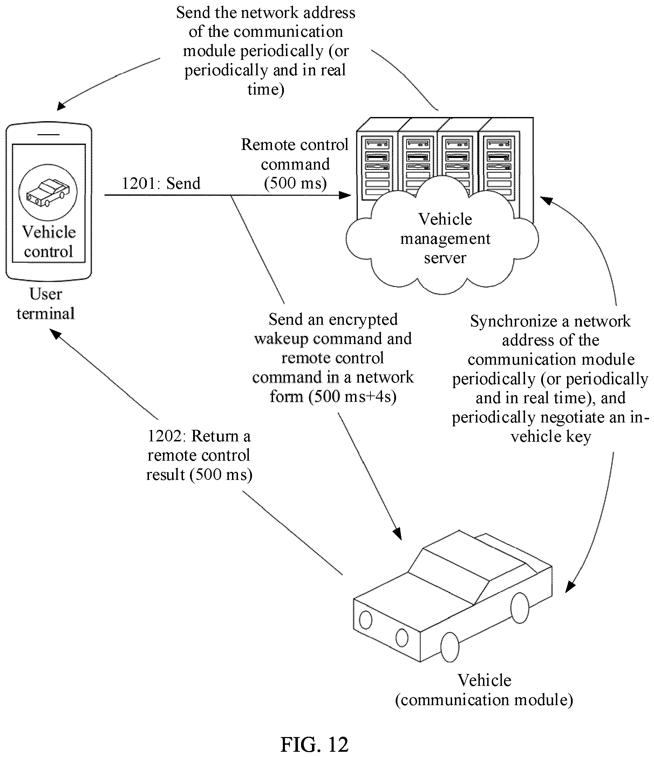

FIG. 12 is an example schematic diagram of a delay analysis of a remote control solution according to Embodiment 3 of this application. In this solution, after a user terminal successfully logs in to a vehicle management server, the vehicle management server sends a network address of a communication module to the user terminal periodically (or periodically and in real time), so that the user terminal can directly wake up a vehicle based on a latest network address in a network form and then directly perform remote control. As shown in FIG. 12, in the solution, remote control is mainly completed by using the following several steps.

Step 1201: When there is a remote control requirement, the user terminal directly sends an encrypted wakeup command and remote control command to the communication module in a network form based on a network address that is of the communication module and that is newly sent by the vehicle management server, where it needs to take approximately 500 ms, it needs to take approximately 4s when the communication module sends the wakeup command to a component in the vehicle, and it needs to take a total of 4. 5s. In addition, the user terminal further simultaneously sends the remote control command to the vehicle management server. It needs to take approximately 500 ms.

When the user terminal can successfully send the wakeup command and the remote control command in a network form, the communication module directly performs remote control after waking up the vehicle, and does not need to perform indirect wakeup and remote control by using the vehicle management server, to reduce a delay introduced when the vehicle management server forwards data. When the user terminal cannot successfully send the wakeup command and the remote control command in a network form, the user terminal indirectly wakes up and remotely controls the vehicle in the solution in FIG. 11 by using the vehicle management server. In other words, in a worst situation, a delay is the same as that in the solution in FIG. 11.

Step 1202: After determining that the remote control command is completed, the communication module directly returns a remote control result to the user terminal, where it needs to take approximately 500 ms.

It can be learned from the foregoing content that, in the solution shown in FIG. 12, in addition to an execution time period spent for performing wakeup and an execution time period spent for performing remote control, it needs to take at least approximately 5 seconds (4. 5 ms+500 ms). A shortest delay produced in this solution is lower than a delay in the solution shown in FIG. 11. Even if a network communication status between the user terminal and the communication module is poor, in this solution, the vehicle can be woken up and remotely controlled by directly using the remote control command simultaneously sent to the vehicle management server. In other words, in a worst situation, a delay is the same as that in the solution shown in FIG. 11. In addition, in this solution, to ensure a success rate of waking up the vehicle with a shortest delay, in addition to periodically synchronize the network address of the communication module to the user terminal by the vehicle management server, a changed network address of the communication module is synchronized in real time, to further increase a probability that controlling the vehicle with a shortest delay succeeds. It can be learned that, in the solution shown in FIG. 12, reducing a wakeup delay and increasing a wakeup success rate can also be both ensured.

In conclusion, compared with the existing solutions provided in FIG. 9 and FIG. 10, in the remote control solution provided in the foregoing embodiments of this application, an original or even higher wakeup success rate can be ensured as much as possible when a remote control delay is greatly reduced.

It should be noted that, names of the foregoing information are merely examples. With evolution of communication technologies, a name of any of the information may be changed. However, regardless of how the names of the information change, provided that meanings of the information are the same as those of the information in this application, the information falls within the protection scope of this application.

The foregoing mainly describes the solutions provided in this application from a perspective of interaction between the network elements. It can be understood that, to implement the foregoing functions, each network element includes a corresponding hardware structure and/or software module for executing each function. A person of ordinary skill in the art should easily be aware that, in combination with the examples described in embodiments disclosed in this specification, units and algorithm steps may be implemented by hardware or a combination of hardware and computer software in the present application. Whether a function is performed by hardware or hardware driven by computer software depends on particular applications and design constraints of the technical solution. A person skilled in the art may use different methods to implement the described functions for each particular application, but it should not be considered that the implementation goes beyond the scope of the present application.

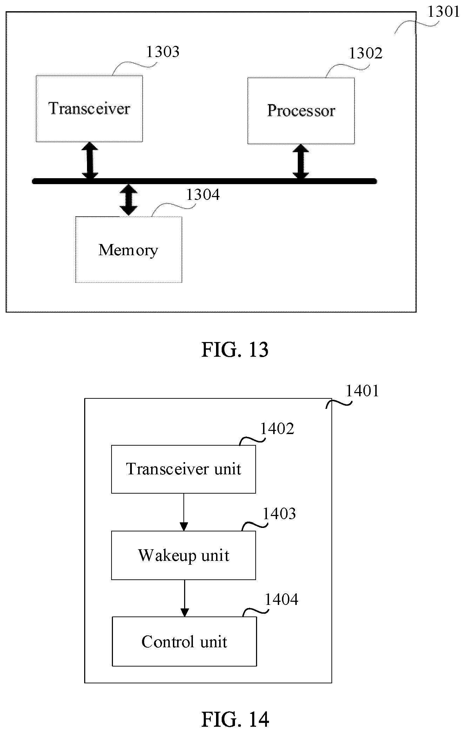

According to the foregoing methods, FIG. 13 is an example schematic diagram of a structure of a remote control apparatus according to an embodiment of this application. As shown in FIG. 13, the apparatus may be a communication module in a vehicle, a vehicle management server, or a user terminal, or may be a chip or a circuit, for example, a chip or a circuit that may be disposed in the communication module, for another example, a chip or a circuit that may be disposed in the vehicle management server, for still another example, a chip or a circuit that may be disposed in the user terminal. The communication module may be a component having a communication capability in the vehicle. For example, the communication module may be the communication module shown in any one of FIG. 2, FIG. 3A and FIG. 3B, or FIG. 5A and FIG. 5B. The vehicle management server may be a device having a management capability. For example, the vehicle management server may be the vehicle management server shown in any one of FIG. 2, FIG. 3A and FIG. 3B, or FIG. 5A and FIG. 5B. The user terminal may be a device having a data exchange capability. For example, the user terminal may be the user terminal shown in any one of FIG. 2, FIG. 3A and FIG. 3B, or FIG. 5A and FIG. 5B.

As shown in FIG. 13, a remote control apparatus 1301 may include a processor 1302, a memory 1304, and a transceiver 1303, and may further include a bus system. The processor 1302, the memory 1304, and the transceiver 1303 may be connected through the bus system.

It should be understood that the processor 1302 may be a chip. For example, the processor 1302 may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a micro controller (micro controller unit, MCU), a programmable logic device (programmable logic device, PLD), or another integrated chip.

In an implementation process, steps in the foregoing methods may be implemented through an integrated logical circuit of hardware in the processor 1302, or by using instructions in a form of software. The steps in the methods disclosed with reference to embodiments of this application may be directly performed and completed by a hardware processor, or may be performed and completed by a combination of hardware and a software module in the processor 1302. The software module may be located in a mature storage medium in the art such as a random access memory, a flash memory, a read-only memory, a programmable read-only memory, an electrically erasable programmable memory, or a register. The storage medium is located in the memory 1304, and the processor 1302 reads information in the memory 1304 and completes the steps in the foregoing methods in combination with hardware of the processor 1302.

It should be noted that, the processor 1302 in this embodiment of this application may be an integrated circuit chip, and has a signal processing capability. In an implementation process, the steps in the foregoing method embodiments may be implemented through an integrated logical circuit of hardware in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by a combination of hardware and a software module in the decoding processor. The software module may be located in a mature storage medium in the art such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It can be understood that the memory 1304 in this embodiment of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example rather than limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and methods described in this specification includes but is not limited to these and any memory of another proper type.

When the remote control apparatus 1301 corresponds to a communication module in a vehicle, the remote control apparatus may include a processor 1302, a transceiver 1303, and a memory 1304. The memory 1304 is configured to store instructions. The processor 1302 is configured to execute the instructions stored in the memory 1304, to implement a related solution of the communication module in the method corresponding to any one or more of FIG. 2, FIG. 3A and FIG. 3B, or FIG. 5A and FIG. 5B, or perform the method performed by the communication module in any embodiment in Embodiment 1 to Embodiment 3. For example, when the remote control apparatus 1301 is a communication module, and Embodiment 1 is executed, the transceiver 1303 may receive a wakeup command and a remote control command when the communication module is in a dormant state that supports a remote wakeup function, the processor 1302 may enable the communication module to enter a wakeup state based on the wakeup command, and the transceiver 1303 may send a control message to a component in a vehicle based on the remote control command. The control message is used to start the component or indicate the component to perform an operation indicated by the remote control command.

For concepts, explanations, detailed descriptions, and other steps of the remote control apparatus 1301 that are related to the technical solutions of the communication module provided in embodiments of this application, refer to the descriptions of the content in the foregoing methods or other embodiments. Details are not described herein again.

When the remote control apparatus 1301 corresponds to the vehicle management server, the remote control apparatus may include a processor 1302, a transceiver 1303, and a memory 1304. The memory 1304 is configured to store instructions. The processor 1302 is configured to execute the instructions stored in the memory 1304, to implement a related solution of the vehicle management server corresponding to any one or more of FIG. 2, FIG. 3A and FIG. 3B, or FIG. 5A and FIG. 5B, or perform the method performed by the vehicle management server in any embodiment in Embodiment 1 to Embodiment 3. For example, when the remote control apparatus 1301 is a vehicle management server, and Embodiment 1 is executed, under control of the processor 1302, the transceiver 1303 may receive a first remote control command from the user terminal; send a wakeup command to the vehicle based on the first remote control command, to enable the communication module in the vehicle to enter a wakeup state; and when the communication module is in a dormant state that supports a remote wakeup function, send a second remote control command to the communication module in the vehicle based on the first remote control command, where the second remote control command indicates the component in the vehicle to start or perform a first operation.

For concepts, explanations, detailed descriptions, and other steps of the remote control apparatus 1301 that are related to the technical solutions of the vehicle management server provided in embodiments of this application, refer to the descriptions of the content in the foregoing methods or other embodiments. Details are not described herein again.

When the remote control apparatus 1301 corresponds to the user terminal, the remote control apparatus may include a processor 1302, a transceiver 1303, and a memory 1304. The memory 1304 is configured to store instructions. The processor 1302 is configured to execute the instructions stored in the memory 1304, to implement a related solution of the user terminal in the method corresponding to any one or more of FIG. 2, FIG. 3A and FIG. 3B, or FIG. 5A and FIG. 5B, or perform the method performed by the user terminal in any embodiment in Embodiment 1 to Embodiment 3. For example, when the remote control apparatus 1301 is a user terminal, and Embodiment 1 is executed, under control of the processor 1302, the transceiver 1303 may receive a network address of the communication module in the vehicle from the vehicle management server; and when the communication module is in a dormant state that supports a remote wakeup function, send a third remote control command to the vehicle based on the network address, where the third remote control command indicates a component in the vehicle to start or perform a first operation.

For concepts, explanations, detailed descriptions, and other steps of the remote control apparatus 1301 that are related to the technical solutions of the user terminal provided in embodiments of this application, refer to the descriptions of the content in the foregoing methods or other embodiments. Details are not described herein again.

Based on the foregoing embodiments and a same concept, FIG. 14 is an example schematic diagram of a structure of a remote control apparatus according to an embodiment of this application. As shown in FIG. 14, a remote control apparatus 1401 may be a communication module in a vehicle, for example, may be the communication module in FIG. 2, FIG. 3A and FIG. 3B, or FIG. 5A and FIG. 5B; or may be a chip or a circuit, for example, a chip or a circuit that may be disposed in the communication module. The remote control apparatus may implement the steps performed by the communication module in the method corresponding to any one or more of FIG. 2, FIG. 3A and FIG. 3B, or FIG. 5A and FIG. 5B, or perform the method performed by the communication module in any embodiment in Embodiment 1 to Embodiment 3.

As shown in FIG. 14, the remote control apparatus 1401 may include a transceiver unit 1402, a wakeup unit 1403, and a control unit 1404. When the remote control apparatus 1401 is a communication module, and Embodiment 1 is executed, the transceiver unit 1402 may receive a wakeup command and a remote control command when the communication module in the vehicle is in a dormant state that supports a remote wakeup function; the wakeup unit 1403 may enable, based on the wakeup command, the communication module to enter a wakeup state; and the control unit 1404 may send a control message to a component in the vehicle based on the remote control command. The control message is used to start the component in the vehicle or indicate the component in the vehicle to perform an operation indicated by the remote control command.

The transceiver unit 1402 may be a sending unit or a transmitter when sending information. The transceiver unit 1402 may be a receiving unit or a receiver when receiving information. The transceiver unit 1402 may be a transceiver. The transceiver, the transmitter, or the receiver may be a radio frequency circuit. When the remote control apparatus 1401 includes a storage unit, and the storage unit is configured to store computer instructions. The wakeup unit 1403 and the control unit 1404 each are communicatively connected to the storage unit. The wakeup unit 1403 and the control unit 1404 each execute the computer instructions stored in the storage unit, so that the remote control apparatus 1401 can be configured to perform the method performed by the communication module in any embodiment in Embodiment 1 to Embodiment 3. The wakeup unit 1403 or the control unit 1404 may be a general-purpose central processing unit (CPU), a microprocessor, or an application-specific integrated circuit (application-specific integrated circuit, ASIC).

When the remote control apparatus 1401 is a communication module, the transceiver unit 1402 may be an input and/or output interface, a pin, a circuit, or the like. The wakeup unit 1403 and the control unit 1404 may execute computer-executable instructions stored in the storage unit, so that a chip in the remote control apparatus 1401 performs the method performed in any embodiment in Embodiment 1 to Embodiment 3. Optionally, the storage unit is a storage unit in the chip, for example, a register or a cache. Alternatively, the storage unit may be a storage unit outside the chip in the remote control apparatus 1401, for example, a read-only memory (read-only memory, ROM), another type of static storage device that can store static information and instructions, or a random access memory (random access memory, RAM).

For concepts, explanations, detailed descriptions, and other steps of the remote control apparatus 1401 that are related to the technical solutions provided in embodiments of this application, refer to the descriptions of the content in the foregoing methods or other embodiments. Details are not described herein again.

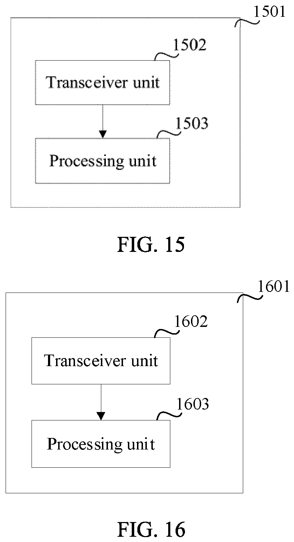

Based on the foregoing embodiments and a same concept, FIG. 15 is an example schematic diagram of another remote control apparatus according to an embodiment of this application. As shown in FIG. 15, a remote control apparatus 1501 may be a vehicle management server, for example, may be the vehicle management server shown in any one of FIG. 2, FIG. 3A and FIG. 3B, or FIG. 5A and FIG. 5B, or may be a chip or a circuit, for example, a chip or a circuit that may be disposed in the vehicle management server. The remote control apparatus 1501 may implement the steps performed by the vehicle management server in the method corresponding to any one or more of FIG. 2, FIG. 3A and FIG. 3B, or FIG. 5A and FIG. 5B, or perform the method performed by the vehicle management server in any embodiment in Embodiment 1 to Embodiment 3.

As shown in FIG. 15, the remote control apparatus 1501 may include a transceiver unit 1502 and a processing unit 1503. When the remote control apparatus 1501 is a vehicle management server, and Embodiment 1 is executed, under control of the processing unit 1503, the transceiver unit 1502 may receive a first remote control command from a user terminal; send a wakeup command to a vehicle based on the first remote control command, where the wakeup command is used to enable a communication module in the vehicle to enter a wakeup state; and when the communication module is in a dormant state that supports a remote wakeup function, send a second remote control command to the vehicle based on the first remote control command, where the second remote control command indicates the component in the vehicle to start or perform a first operation.

The transceiver unit 1502 may be a sending unit or a transmitter when sending information. The transceiver unit 1502 may be a receiving unit or a receiver when receiving information. The transceiver unit 1502 may be a transceiver. The transceiver, the transmitter, or the receiver may be a radio frequency circuit. When the remote control apparatus 1501 includes a storage unit, and the storage unit is configured to store computer instructions. The processing unit 1503 is communicatively connected to the storage unit. The processing unit 1503 executes the computer instructions stored in the storage unit, so that the remote control apparatus 1501 can be configured to perform the method performed by the vehicle management server in any embodiment in Embodiment 1 to Embodiment 3. The processing unit 1503 may be a general-purpose central processing unit (CPU), a microprocessor, or an application-specific integrated circuit (ASIC).

When the remote control apparatus 1501 is a chip, the transceiver unit 1502 may be an input and/or output interface, a pin, a circuit, or the like. The processing unit 1503 may execute computer-executable instructions stored in the storage unit, so that a chip in the remote control apparatus 1501 performs the method performed in any embodiment in Embodiment 1 to Embodiment 3. Optionally, the storage unit is a storage unit in the chip, for example, a register or a cache. Alternatively, the storage unit may be a storage unit outside the chip in the remote control apparatus 1501, for example, a read-only memory (ROM), another type of static storage device that can store static information and instructions, or a random access memory (RAM).

For concepts, explanations, detailed descriptions, and other steps of the remote control apparatus 1501 that are related to the technical solutions provided in embodiments of this application, refer to the descriptions of the content in the foregoing methods or other embodiments. Details are not described herein again.

Based on the foregoing embodiments and a same concept, FIG. 16 is an example schematic diagram of still another remote control apparatus according to an embodiment of this application. As shown in FIG. 16, a remote control apparatus 1601 may be a user terminal, for example, may be the user terminal in FIG. 2, FIG. 3A and FIG. 3B, or FIG. 5A and FIG. 5B; or may be a chip or a circuit, for example, a chip or a circuit that may be disposed in the user terminal. The remote control apparatus 1601 may implement the steps performed by the user terminal in the method corresponding to any one or more of FIG. 2, FIG. 3A and FIG. 3B, or FIG. 5A and FIG. 5B, or perform the method performed by the user terminal in any embodiment in Embodiment 1 to Embodiment 3.

As shown in FIG. 16, the remote control apparatus 1601 may include a transceiver unit 1602 and a processing unit 1603. When the remote control apparatus 1601 is a user terminal, and Embodiment 1 is executed, under control of the processing unit 1603, the transceiver unit 1602 may receive a network address of a communication module in a vehicle from a vehicle management server; and when the communication module is in a dormant state that supports a remote wakeup function, send a third remote control command to the vehicle based on the network address, where the third remote control command indicates a component in the vehicle to start or perform a first operation.

The transceiver unit 1602 may be a sending unit or a transmitter when sending information. The transceiver unit 1602 may be a receiving unit or a receiver when receiving information. The transceiver unit 1602 may be a transceiver. The transceiver, the transmitter, or the receiver may be a radio frequency circuit. When the remote control apparatus 1601 includes a storage unit, and the storage unit is configured to store computer instructions. The processing unit 1603 is communicatively connected to the storage unit. The processing unit 1603 executes the computer instructions stored in the storage unit, so that the remote control apparatus 1601 can be configured to perform the method performed by the user terminal in any embodiment in Embodiment 1 to Embodiment 3. The processing unit 1603 may be a general-purpose central processing unit (CPU), a microprocessor, or an application-specific integrated circuit (ASIC).

When the remote control apparatus 1601 is a chip, the transceiver unit 1602 may be an input and/or output interface, a pin, a circuit, or the like. The processing unit 1603 may execute computer-executable instructions stored in the storage unit, so that a chip in the remote control apparatus 1601 performs the method performed in any embodiment in Embodiment 1 to Embodiment 3. Optionally, the storage unit is a storage unit in the chip, for example, a register or a cache. Alternatively, the storage unit may be a storage unit outside the chip in the remote control apparatus 1601, for example, a read-only memory (ROM), another type of static storage device that can store static information and instructions, or a random access memory (RAM).

For concepts, explanations, detailed descriptions, and other steps of the remote control apparatus 1601 that are related to the technical solutions provided in embodiments of this application, refer to the descriptions of the content in the foregoing methods or other embodiments. Details are not described herein again.

It should be understood that division into units of the remote control apparatus 1401, the remote control apparatus 1501, and the remote control apparatus 1601 is merely logical function division. In an actual implementation, all or some units may be integrated into one physical entity, or may be physically separated. In this embodiment of this application, the transceiver unit 1402, the transceiver unit 1502, and the transceiver unit 1602 may be implemented by the transceiver 1303 in FIG. 13, and the wakeup unit 1403, the control unit 1404, the processing unit 1503, and the processing unit 1603 may be implemented by the processor 1302 in FIG. 13.

According to the methods provided in embodiments of this application, this application further provides a computer program product. The computer program product includes computer program code, and when the computer program code is run on a computer, the computer is enabled to perform the method in any one of the embodiments shown in FIG. 2, FIG. 3A and FIG. 3B, and FIG. 5A and FIG. 5B.

According to the methods provided in embodiments of this application, this application further provides a computer-readable storage medium. The computer-readable medium stores program code, and when the program code is run on a computer, the computer is enabled to perform the method in any one of embodiments shown in FIG. 2, FIG. 3A and FIG. 3B, and FIG. 5A and FIG. 5B.

According to the methods provided in embodiments of this application, this application further provides a vehicle. The vehicle may include a communication module, and the communication module may be configured to: perform steps performed by the communication module in the method corresponding to any one or more of FIG. 2, FIG. 3A and FIG. 3B, or FIG. 5A and FIG. 5B, or perform the method performed by the communication module in any embodiment in Embodiment 1 to Embodiment 3.

According to the methods provided in embodiments of this application, this application further provides a remote control system, including the foregoing vehicle management server, vehicle, and user terminal.

All or some of the foregoing embodiments may be implemented by using software, hardware, firmware, or any combination thereof. When the software is used to implement embodiments, all or some embodiments may be implemented in a form of a computer program product. The computer program product includes one or more computer instructions. When the computer instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from one website, computer, vehicle management server, or data center to another website, computer, vehicle management server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by a computer, or a data storage device, for example, a vehicle management server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state drive, SSD)), or the like.

Apparently, a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A remote control method, wherein the method is applied to a communication module in a vehicle, and comprises:
receiving a wakeup command and a remote control command when the communication module is in a dormant state that supports a remote wakeup function;
enabling, based on the wakeup command, the communication module to enter a wakeup state; and
sending a control message to a component in the vehicle based on the remote control command, wherein the control message is used to start the component or indicate the component to perform an operation indicated by the remote control command.

2. The method according to claim 1, wherein the remote control command is an Internet protocol IP data packet, and the wakeup command is an SMS message or an IP data packet.

3. The method according to claim 1 or 2, wherein the wakeup command and the remote control command are sent by a vehicle management server, or are sent by a user terminal that logs in to the vehicle management server.

4. The method according to any one of claims 1 to 3, wherein before the receiving a wakeup command and a remote control command, the method further comprises at least one of the following operations:
logging in to the vehicle management server;
periodically sending a valid network address of the communication module to the vehicle management server;
sending an updated network address of the communication module to the vehicle management server;
periodically sending a heartbeat data packet to the vehicle management server;
sending an updated key to the vehicle management server; or
periodically performing authentication with the vehicle management server.

5. A remote control method, wherein the method comprises:
receiving a first remote control command from a user terminal;
sending a wakeup command to a vehicle based on the first remote control command, wherein the wakeup command is used to enable a communication module in the vehicle to enter a wakeup state; and
sending a second remote control command to the vehicle based on the first remote control command when the communication module is in a dormant state that supports a remote wakeup function, wherein the second remote control command indicates a component in the vehicle to start or perform a first operation.

6. The method according to claim 5, wherein the second remote control command is an Internet protocol IP data packet, and the wakeup command is an SMS message or an IP data packet.

7. The method according to claim 5 or 6, wherein before the sending a wakeup command and the sending a second remote control command, the method further comprises at least one of the following operations:
accepting login of the communication module;
periodically receiving a valid network address of the communication module from the communication module;
receiving an updated network address of the communication module from the communication module;
periodically receiving a heartbeat data packet from the communication module;
receiving an updated key from the communication module; or
periodically performing authentication with the communication module.

8. The method according to any one of claims 5 to 7, wherein before the receiving a first remote control command from a user terminal, the method further comprises:
sending a network address of the communication module to the user terminal.

9. A remote control method, wherein the method comprises:
receiving a network address of a communication module in a vehicle from a vehicle management server; and
sending a third remote control command to the vehicle based on the network address when the communication module is in a dormant state that supports a remote wakeup function, wherein the third remote control command indicates a component in the vehicle to start or perform a first operation.

10. The method according to claim 9, wherein the method further comprises:
sending a wakeup command to the vehicle based on the network address, wherein the wakeup command is used to enable the communication module to enter a wakeup state.

11. The method according to claim 9 or 10, wherein the method further comprises:
sending a first remote control command to the vehicle management server, wherein the first remote control command indicates the component in the vehicle to start or perform the first operation.

12. A remote control apparatus, comprising:
a transceiver unit, configured to receive a wakeup command and a remote control command when a communication module in a vehicle is in a dormant state that supports a remote wakeup function;
a wakeup unit, configured to enable, based on the wakeup command, the communication module to enter a wakeup state; and
a control unit, configured to send a control message to a component in the vehicle based on the remote control command, wherein the control message is used to start the component or indicate the component to perform an operation indicated by the remote control command.

13. The apparatus according to claim 12, wherein the remote control command is an Internet protocol IP data packet, and the wakeup command is an SMS message or an IP data packet.

14. The apparatus according to claim 12 or 13, wherein the wakeup command and the remote control command are sent by a vehicle management server, or are sent by a user terminal that logs in to the vehicle management server.

15. The apparatus according to any one of claims 12 to 14, wherein before the transceiver unit receives the wakeup command and the remote control command, the transceiver unit is further configured to perform at least one of the following operations:
logging in to the vehicle management server;
periodically sending a valid network address of the communication module to the vehicle management server;
sending an updated network address of the communication module to the vehicle management server;
periodically sending a heartbeat data packet to the vehicle management server;
sending an updated key to the vehicle management server; or
periodically performing authentication with the vehicle management server.

16. A remote control apparatus, comprising a transceiver unit and a processing unit, wherein the transceiver unit performs the following operations under control of the processing unit:
receiving a first remote control command from a user terminal;
sending a wakeup command to a vehicle based on the first remote control command, wherein the wakeup command is used to enable a communication module in the vehicle to enter a wakeup state; and
sending a second remote control command to the vehicle based on the first remote control command when the communication module is in a dormant state that supports a remote wakeup function, wherein the second remote control command indicates a component in the vehicle to start or perform a first operation.

17. The apparatus according to claim 16, wherein the second remote control command is an Internet protocol IP data packet, and the wakeup command is an SMS message or an IP data packet.

18. The apparatus according to claim 16 or 17, wherein before the transceiver unit sends the wakeup command and sends the second remote control command, the transceiver unit is further configured to perform at least one of the following operations:
accepting login of the communication module;
periodically receiving a valid network address of the communication module from the communication module;
receiving an updated network address of the communication module from the communication module;
periodically receiving a heartbeat data packet from the communication module;
receiving an updated key from the communication module; or
periodically performing authentication with the communication module.

19. The apparatus according to any one of claims 16 to 18, wherein before the transceiver unit receives the first remote control command from the user terminal, the transceiver unit is further configured to:
send a network address of the communication module to the user terminal.

20. A remote control apparatus, comprising a transceiver unit and a processing unit, wherein the transceiver unit performs the following operations under control of the processing unit:
receiving a network address of a communication module in a vehicle from a vehicle management server; and
sending a third remote control command to the vehicle based on the network address when the communication module is in a dormant state that supports a remote wakeup function, wherein the third remote control command indicates a component in the vehicle to start or perform a first operation.

21. The apparatus according to claim 20, wherein the transceiver unit is further configured to:
send a wakeup command to the vehicle based on the network address, wherein the wakeup command is used to enable the communication module to enter a wakeup state.

22. The apparatus according to claim 20 or 21, wherein the transceiver unit is further configured to:
send a first remote control command to the vehicle management server, wherein the first remote control command indicates the component in the vehicle to start or perform the first operation.

23. A remote control apparatus, comprising a processor and a memory, wherein the memory stores a computer program, and the processor runs the computer program, to implement the method according to any one of claims 1 to 4.

24. A remote control apparatus, comprising a processor and a memory, wherein the memory stores a computer program, and the processor runs the computer program, to implement the method according to any one of claims 5 to 8.

25. A remote control apparatus, comprising a processor and a memory, wherein the memory stores a computer program, and the processor runs the computer program, to implement the method according to any one of claims 9 to 11.

26. A vehicle, comprising the remote control apparatus according to any one of claims 12 to 15, or comprising the remote control apparatus according to claim 23.

27. A computer-readable storage medium, wherein the computer-readable storage medium stores a computer program, and when the computer program is run, the method according to any one of claims 1 to 4 is implemented.

28. A computer-readable storage medium, wherein the computer-readable storage medium stores a computer program, and when the computer program is run, the method according to any one of claims 5 to 8 is implemented.

29. A computer-readable storage medium, wherein the computer-readable storage medium stores a computer program, and when the computer program is run, the method according to any one of claims 9 to 11 is implemented.

30. A computer program product, comprising computer instructions, wherein when the computer instructions are run on a processor, the method according to any one of claims 1 to 4 is implemented.

31. A computer program product, comprising computer instructions, wherein when the computer instructions are run on a processor, the method according to any one of claims 5 to 8 is implemented.

32. A computer program product, comprising computer instructions, wherein when the computer instructions are run on a processor, the method according to any one of claims 9 to 11 is implemented.

33. A remote control system, comprising a communication module in a vehicle and a vehicle management server, wherein the communication module is configured to implement the method according to any one of claims 1 to 4, and the vehicle management server is configured to implement the method according to any one of claims 5 to 8.

34. A remote control system, comprising a first device, a second device, and a third device in a vehicle, wherein the first device is configured to implement the method according to any one of claims 1 to 4, the second device is configured to implement the method according to any one of claims 5 to 8, and the third device is configured to implement the method according to any one of claims 9 to 11.
